# EUROPEAN PATENT APPLICATION

(11) **EP 1 954 066 A1**
(43) Date of publication of application: **06.08.2008**
(21) Application number: 05809451.7
(22) Date of filing: 21.11.2005
(51) Int. Cl.: H04Q 7/22, H04L 12/28, H04L 12/46, H04Q 7/28

(54) **RADIO COMMUNICATION SYSTEM, BASE STATION, MOBILE DEVICE, AND HANDOVER CONTROL SERVER**

(71) Applicant: MITSUBISHI ELECTRIC CORPORATION, Chiyoda-ku Tokyo 100-8310 (JP)
(72) Inventor: TAKE, Keijiro, c/o Mitsubishi Electric Corporation, Tokyo; 100-8310 (JP)
(74) Representative: Pfenning, Meinig & Partner GbR
(86) International application number: PCT/JP2005/021384
(87) International publication number: WO 2007/057977

(57) **Abstract**

A handover control server (3) calculates a weight function of each peripheral cell based on network configuration information, cell configuration information, a wireless access capacity of a mobile device, and a used resource at each cell measured by base stations (2-1 to 2-3), and notifies a cell list in which there is registered information concerning a weight-function identifier of the peripheral cell associated with a generated peripheral cell, a base station controlling the peripheral cell, a wireless access system of the base station, an edge router accommodating the base station, and a router identifying the edge router, based on weight function information that is a set of a calculated weight function and a weight function identifier for identifying the weight function, weight function information, network configuration information, and cell configuration information. A mobile device (1) measures wireless-line qualities of the peripheral cells registered in the cell list and the cell currently connected, and determines a cell of a handover destination by calculating a peripheral-cell selection parameter using the measured wireless-line qualities, the weight function information, and the cell list.

## Description

### TECHNICAL FIELD

The present invention relates to a radio communication system, and more particularly, to a handover in a radio communication system.

### BACKGROUND ART

Conventionally, various techniques concerning handover methods in radio communication systems have been considered. As handover methods using a wireless-line quality as a condition of selecting a cell that a mobile device hands over, there are a method that a mobile device selects a cell to be handed over, and a method that a base-station control device selects a cell to be handed over.

According to the method that a mobile device selects a cell to be handed over, when a wireless-line quality of a cell in communication is degraded, the mobile device measures wireless-line qualities of cells (cells around the cell in communication) at a handover candidate destination obtained in advance by notification information, selects a cell of the best wireless-line quality among the measured wireless-line qualities, and sets the selected cell and the wireless line, thereby handing over from the cell of a degraded wireless-line quality to the cell of a good wireless-line quality.

According to the method that a base-station control device selects a cell to be handed over, when a wireless-line quality of a wireless line with the cell in communication is degraded, a mobile device measures wireless-line qualities of cells (cells around the cell in communication) at a handover candidate destination obtained in advance by notification information, and notifies the measured wireless-line qualities of the cells to the base-station control device. The base-station control device selects a cell of the best wireless-line quality among the notified wireless-line qualities, secures a wireless line resource of the base station that controls the selected cell, and instructs a handover to the selected cell to the mobile device. The mobile device hands over from the cell of a degraded wireless-line quality to the cell of a good wireless-line quality, following an instruction from the base-station control device.

As conventional techniques of selecting a cell to be handed over, considering not only the wireless-line quality but also other conditions, there are, for example, those disclosed in Patent Documents 1 and 2. Patent Document 1 discloses the following technique. A radio base station (base station) controlling a cell of a handover candidate destination of a mobile station (mobile device) notifies the number of mobile devices that the own station can receive (the number of receivable mobile stations). A mobile station receiving this notification information finds out the wireless-line quality from a reception level of the notification information, and selects a base station of which reception level is equal to or higher than a predetermined value and of which the number of receivable mobile stations is largest, as a connection destination.

Specifically, each radio base station calculates the number of receivable mobile stations based on a total communication resource amount, a predetermined amount of unit communication resources (a value depending on a communication environment, minimum communication speed, and communication quality assumed for a system), and the number of base stations currently connected to the own station. Each radio base station transmits a notification signal containing the calculated number of receivable mobile stations in a constant cycle.

When a reception level of a notification signal from each peripheral radio base station that can become a connection destination candidate is equal to or higher than a predetermined reception level, the mobile station extracts a number of receivable mobile stations contained in the notification signal. The mobile station selects a radio base station taking a maximum value as a connection-destination radio base station, among the extracted number of receivable mobile stations. When there are plural radio base stations taking a maximum value, the mobile station selects a radio base station of which reception level of a notification signal is a maximum, as the connection-destination radio base station, among the radio base stations taking a maximum value.

Patent Document 2 discloses a technique of notifying an amount of usable wireless resources, and selecting a cell of a handover candidate. Specifically, each radio base station (base station) periodically transmits a beacon signal, and a wireless-resource management device periodically notifies identifiers of radio base stations present around a mobile terminal device (mobile device) and a radio-base-station-information advertising message including radio base-station information of the radio base station, to the mobile terminal device.

When the mobile terminal device detects a radio base station of a more satisfactory reception state than that of the radio base station in communication, from the beacon signal and the radio-base-station-information advertising message from each radio base station, the mobile terminal device transmits a detection-radio-base-station notification message including information of an identifier of each radio base station, communication quality information of communication with these radio base stations, and a resource amount required by the own device, to the wireless-resource management device.

Upon selecting the detection-radio-base-station notification message, the wireless-resource management device selects a radio base station becoming a movement destination candidate, based on information obtained by the detection-radio-base-station notification message, wireless resource information of each radio base station, charge information when each radio base station is used, and information concerning access right of the mobile terminal device to each radio base station.

The wireless-resource management device transmits a movement-destination-candidate radio-base-station notification-message including information concerning each radio base station of a selected movement destination candidate and a communication quality of each radio base station, to the mobile terminal device. The mobile terminal device determines a movement-destination radio base station based on each piece of information within the movement-destination-candidate radio-base-station notification-message and a reception line quality from each radio base station.

Patent Document 1: Japanese Patent Application Laid-open No. 2004-128636
Patent Document 2: Japanese Patent Application Laid-open No. 2003-348007

### DISCLOSURE OF INVENTION

### PROBLEM TO BE SOLVED BY THE INVENTION

However, in the wireless resource allocation in the mobile network, a used wireless resource changes according to the wireless-line quality. Therefore, there has been a problem that the conventional techniques of selecting a movement-destination base station by reporting or notifying a wireless resource described in Patent Documents 1 and 2 mentioned above cannot be applied to the mobile network.

Consider a use of a cell selection method of allocating a large cell when the moving speed is fast according to the moving speed of the mobile device, or a cell selection method considering a path at the wire side of the base station (for example, a method of not selecting a cell complicating the path at the wire side). In this case, when a movement-destination base station (a movement destination cell) is selected according to the wireless-line quality and a using state of a wireless resource using the conventional techniques described in Patent Documents 1 and 2 mentioned above, there has been a problem that a determination standard of selecting a cell becoming a selection candidate is limited.

Further, in the mobile network having plural radio frequencies and a wireless access system, there is a limit to measuring capacity of a wireless line quality of peripheral cells of the mobile device, and degradation of communication quality occurs following a handover in the handover of changing a radio frequency or a wireless access system. Therefore, in the mobile network having plural radio frequencies and a wireless access system, peripheral cells of which wireless-line quality is measured by the mobile device also need to be selected considering the measuring capacity of the mobile device.

The present invention has been achieved in view of the above points, and a first object of the present invention is to obtain a radio communication system that performs a handover by determining a handover destination according to the level of wireless-line quality measured by a mobile device, when a wireless resource changed depending on the wireless-line quality.

A second object of the present invention is to obtain a radio communication system that can decrease measurement addition of a wireless-line quality to be measured to determine a handover destination of the mobile device.

### MEANS FOR SOLVING PROBLEM

To solve the above problems and to achieve the object, a radio communication system according to the present invention includes a plurality of base stations that makes a connection to a mobile device via a wireless line by controlling at least one cell, a plurality of edge routers that accommodates at least one of the base stations, and a plurality of routers that accommodates at least one of the edge routers and makes a connection to a handover control server and a second network via a first network. The base station includes a used-resource measuring unit that measures a used resource for each cell controlled by the base station, and notifies a measured used resource to the handover control server. The handover control server includes a network-configuration memory unit that stores therein network configuration information concerning a wireless access system including a used frequency of the base station, cell information controlled by the base station, an edge router accommodating the base station, and a router accommodating the edge router, in association with the base stations, a cell-configuration memory unit that stores therein cell configuration information concerning cell configurations controlled by the base stations, a used-resource memory unit that stores therein used-resource information including the used resource notified from the base station associated with the base station, a weight-function calculating unit that calculates a weight function of each peripheral cell of a cell to which the mobile device is currently connected, based on a wireless-access capacity notified from the mobile device, network configuration information stored in the network-configuration memory unit, cell configuration information stored in the cell-configuration memory unit, and used-resource information stored in the used-resource memory unit, and notifies weight-function information that is a set of a calculated weight function and the weight-function identifier for identifying the weight function to the mobile device, and a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, and notifies a generated cell list to the mobile device. The mobile device includes a peripheral-cell-list memory unit that stores therein a cell list notified from the handover control server, a weight-function memory unit that stores therein weight-function information notified from the handover control server, a wireless-line-quality measuring unit that measures wireless-line qualities of peripheral cells registered in the cell list stored in the peripheral-cell-list memory unit and the cell currently connected, a peripheral-cell selection-parameter calculating-and-comparing unit that calculates a peripheral-cell selection parameter of each cell, by inputting a predetermined parameter to a weight function within the weight function information, based on a wireless-line quality measured by the wireless-line-quality measuring unit, a cell list stored in the peripheral-cell-list memory unit, weight function information stored in the weight-function memory unit, and a wireless-access capacity of the mobile device, and selects candidate cells of a handover destination, based on a calculated peripheral-cell selection parameter, and a peripheral-cell-selection determining unit that determines as a cell of the handover destination a cell having a peripheral-cell parameter of the best communication quality, from among cells having peripheral-cell selection parameters of a better communication quality than that of the cell currently connected, from the candidate cells of the handover destination selected by the peripheral-cell selection-parameter calculating-and-comparing unit.

### EFFECT OF THE INVENTION

In a radio communication system according to the present invention, a handover control server calculates a weight function of each peripheral cell of a cell in which a mobile device is communicating, based on network configuration information and cell configuration information of a radio communication system, wireless access capacity of a mobile device, and a used resource of each cell measured by each base station, notifies to the mobile device, weight function information including the calculated weight function and a weight function identifier for identifying the weight function as a set, generates a cell list registered with information concerning the weight function identifiers of the peripheral cells related to the peripheral cells, a base station controlling the peripheral cell, a wireless access system of the base station, an edge router accommodating the base station, and a router for identifying the edge router, based on the weight function information, the network configuration information, and the cell configuration information, and notifies the generated cell list to the mobile device, and the mobile device measures wireless-line qualities of the peripheral cells registered in the cell list notified from the handover control server and the cell currently connected, calculates a peripheral-cell selection parameter using the measured wireless-line qualities, and the weight function information and the cell list notified from the handover control server, and determines a cell of a handover destination. Therefore, there is an effect that a radio communication system that performs a handover by determining a cell of a handover destination according to the level of the wireless-line quality measured by the mobile device can be obtained.

### BRIEF DESCRIPTION OF THE DRAWINGS

[Fig. 1] Fig. 1 is a schematic diagram of a configuration of a radio communication system according to the present invention.
[Fig. 2] Fig. 2 is one example of a cell configuration of a wireless access network shown in Fig. 1.
[Fig. 3] Fig. 3 is a block diagram of a functional configuration concerning a handover process of a base station shown in Fig. 1.
[Fig. 4] Fig. 4 is a block diagram of a functional configuration concerning a handover process of a handover control server shown in Fig. 1.
[Fig. 5] Fig. 5 is one example of a configuration of network configuration information that a network-configuration memory unit shown in Fig. 4 stores.
[Fig. 6] Fig. 6 is one example of a configuration of cell configuration information that a cell-configuration memory unit shown in Fig. 4 stores.
[Fig. 7] Fig. 7 is one example of a cell list generated by a cell-list generating unit shown in Fig. 4.
[Fig. 8] Fig. 8 is a block diagram of a functional configuration concerning a handover process of a mobile device shown in Fig. 1.
[Fig. 9] Fig. 9 is a flowchart for explaining an operation of a handover control server according to a first embodiment.
[Fig. 10] Fig. 10 is a flowchart for explaining an operation of a mobile device according to the first embodiment.
[Fig. 11] Fig. 11 is a sequence diagram for explaining an operation of a radio communication system according to the first embodiment.
[Fig. 12] Fig. 12 is a block diagram of a functional configuration concerning a handover process of a mobile device according to a second embodiment.
[Fig. 13] Fig. 13 is a block diagram of a functional configuration concerning a handover process of a handover control server according to the second embodiment.
[Fig. 14] Fig. 14 is a sequence diagram for explaining an operation of a radio communication system according to the second embodiment.

### EXPLANATIONS OF LETTERS OR NUMERALS

1, 1a Mobile device
2-1, 2-2, 2-3, 2-4, 2-5, 2-6, 2-7 Base station
3, 3a Handover control server
4-1, 4-2, 4-3 Edge router
5-1, 5-2 Router
6 Wireless access network
7 Core network
8 IP network
9 Mobile network
10 Internet
11-1-1, 11-1-2, 11-1-3, 11-1-4, 11-1-5, 11-1-6, 11-2-1, 11-2-2, 11-2-3, 11-2-4, 11-2-5, 1-3-1, 11-3-2, 11-3-3, 11-3-4, 11-3-5, 11-4-1, 11-4-2, 11-4-3, 11-4-4, 11-4-5, 11-5-1, 11-5-2, 11-5-3, 11-5-4, 11-5-5, 11-5-6, 11-6-1, 11-6-2, 11-6-3, 11-6-4, 11-6-5, 11-6-6, 11-7-1, 11-7-2, 11-7-3, 11-7-4 Cell
12 Weight-function memory unit
13 Peripheral-cell-list memory unit
14 Wireless-line-quality measuring unit
15 Peripheral-cell selection-parameter calculating-and-comparing unit
16 Peripheral-cell-selection determining unit
17 Wireless-line transmitting-and-receiving unit
21, 31 Wired-line terminating unit
22 Used-resource measuring unit
23 Wireless-line transmitting-and-receiving unit
32 Base-station-communication control unit
33 Mobile-device-communication control unit
34 Cell-list generating unit
35 Weight-function calculating unit
36 Network-configuration memory unit
37 Cell-configuration memory unit
38 Used-resource memory unit
39 Weight-function verifying unit

### BEST MODE(S) FOR CARRYING OUT THE INVENTION

Exemplary embodiments of a radio communication system, a base station, a mobile device, and a handover control server according to the present invention will be explained below in detail with reference to the accompanying drawings. The present invention is not limited to the embodiments.

### First Embodiment.

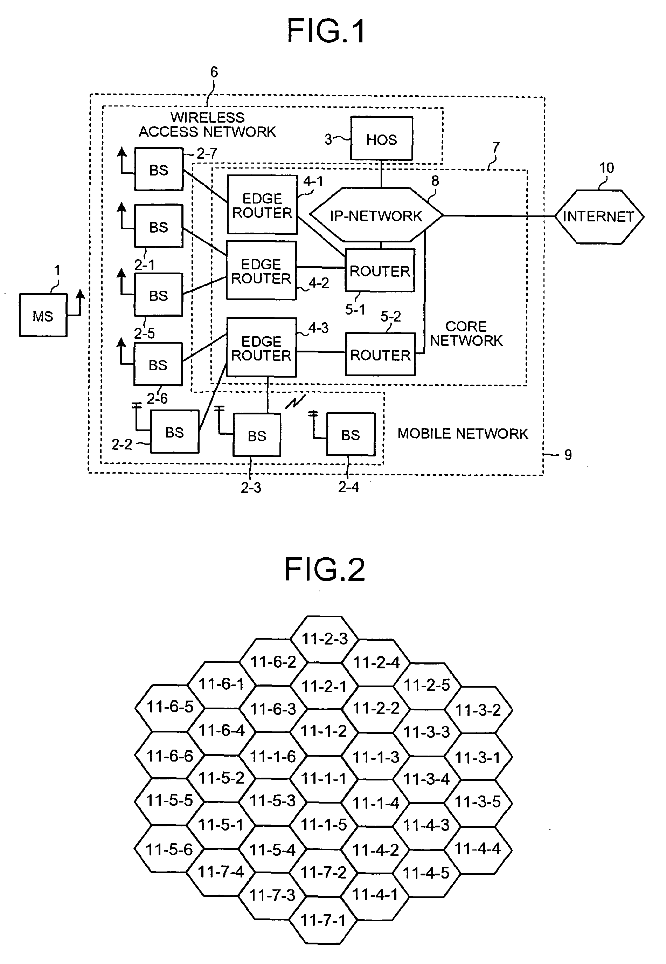

A first embodiment of the present invention is explained with reference to Fig. 1 to Fig. 11. Fig. 1 is a schematic diagram of a configuration of a radio communication system according to the present invention.
In Fig. 1, the radio communication system includes a mobile network 9, the Internet 10 connected to the mobile network 9, and a mobile device (MS) 1 that is connected to a wireless access network 6 via a wireless line and performs communications with other mobile device and a fixed terminal.

The mobile network 9 includes the wireless access network 6 and a core network 7. The wireless access network 6 includes plural (seven, in this example) base stations (BS) 2 (that is, 2-1 to 2-7) connected to the mobile device 1 by the wireless line, and a handover control server (HOS) 3 that controls the handover of the mobile device 1.

The core network 7 includes plural (three, in this example) edge routers 4 (that is, 4-1 to 4-3) that accommodate the base station 2, plural (two, in this example) routers 5 (5-1, 5-2) that perform routing to the edge router 4 and accommodate the edge router 4, and an IP network 8 to which a router 5, a handover control server 3, and the Internet 10 are connected.

In Fig. 1, the edge router 4-1 accommodates the base station 2-7 by a wired line, the edge router 4-2 accommodates the base stations 2-1 and 2-5 by a wired line, and the edge router 4-3 accommodates the base stations 2-2, 2-3, and 2-6 by a wired line. The base station 2-4 is accommodated in the edge router 4-3 via the base station 2-3 via a wireless line.

Fig. 2 is one example of a cell configuration of the wireless access network 6 shown in Fig. 1. In Fig. 2, cells 11-1-1 to 11-1-6 are controlled by the base station 2-1, cells 11-2-1 to 11-2-5 are controlled by the base station 2-2, and cells 11-3-1 to 11-3-5 are controlled by the base station 2-3. Cells 11-4-1 to 11-4-5 are controlled by the base station 2-4, cells 11-5-1 to 11-5-6 are controlled by the base station 2-5, and cells 11-6-1 to 11-6-6 are controlled by the base station 2-6. Cells 11-7-1 to 11-7-4 are controlled by the base station 2-7. The number of cells controlled by the base station 2 can be any number equal to or higher than 1.

The radio communication system according to the present invention is configured as shown in Fig. 1, and the base station 2 and the handover control server 3 communicate with each other via the edge router 4, the router 5, and the IP network 8. The mobile device 1 and the handover control server 3 communicate with each other via the base station 2, the edge router 4, the router 5, and the IP network 8.

Next, functional configurations concerning handover processes performed by the base station 2, the mobile device 1, and the handover control server 3 shown in Fig. 1 are explained.

First, a functional configuration concerning a handover process performed by the base station 2 is explained. The base stations 2-1 and 2-5 to 2-7 are the base stations connected to the mobile device 1 by the same wireless access system and the used frequency. The base stations 2-2 to 2-4 are the base stations 2 connected to the mobile device 1 via a wireless access system or a used frequency different from that of the base stations 2-1 and 2-5 to 2-7. However, the functional configuration concerning the handover process is the same without depending on the wireless access system and the used frequency.

The base station 2 measures the resources used by the own station such as the wireless resource, the wired resource, and the device resource (such as a buffering resource within the own station and a CPU using rate), for each cell controlled by the own station, based on an instruction of the handover control server 3, and notifies the measured used resources to the handover control server 3.

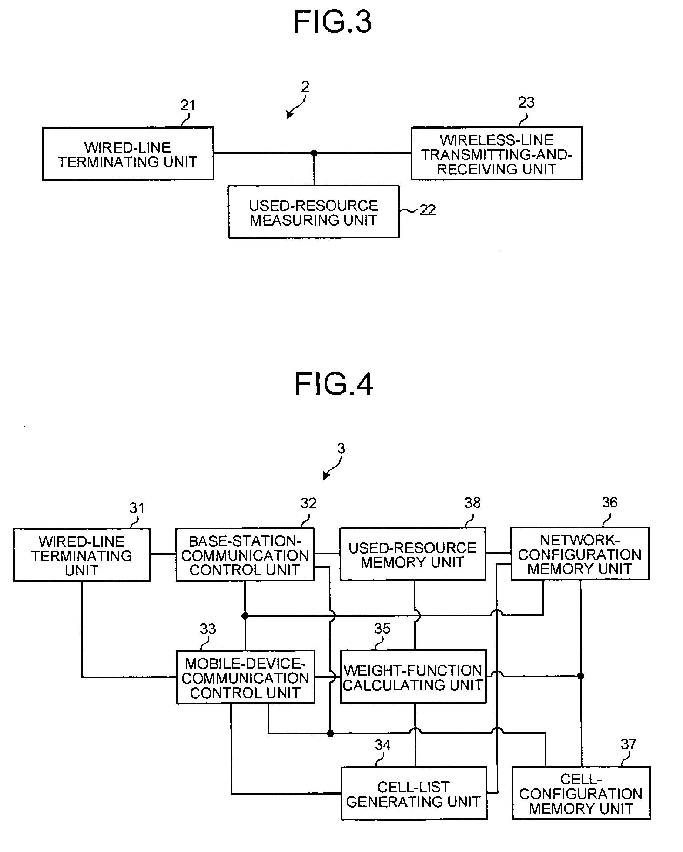

Fig. 3 is a block diagram of a functional configuration concerning a handover process of the base station 2 shown in Fig. 1. In Fig. 3, the base station 2 includes: a wired-line terminating unit 21 that has an interface function of a wired line connected to the edge router 4 and that terminates the wired line; a wireless transmitting-and-receiving unit 23 that has an interface function of a wireless line connected to the mobile device 1 and that transmits and receives a signal by the wired line; and a used-resource measuring unit 22 that measures a used resource for each cell controlled by the own station and that notifies the measured used resource to the handover control server 3.

Next, a functional configuration concerning a handover process performed by the handover control server 3 is explained. The handover control server 3 generates a cell list based on a used resource notified from the base station 2, network configuration information of the mobile network 9 managed by the own device, and cell configuration information indicating a configuration of cells 11 (11-1-1 to 11-1-6, 11-2-1 to 11-2-5, 11-3-1 to 11-3-5, 11-4-1 to 11-4-5, 11-5-1 to 11-5-6, 11-6-1 to 11-6-6, and 11-7-1 to 11-7-4) controlled by the base station 2, and notifies a generated weight function to the mobile device via the base station 2.

Fig. 4 is a block diagram of a functional configuration concerning a handover process of the handover control server 3 shown in Fig. 1. In Fig. 4, the handover control server 3 includes a wired-line terminating unit 31, a network-configuration memory unit 36, a cell-configuration memory unit 37, a base-station-communication control unit 32, a used-resource memory unit 38, a cell-list generating unit 34, a weight-function calculating unit 35, and a mobile-device-communication control unit 33.

The wired-line terminating unit 31 includes an interface function of a wired line connected to the IP network 8, and terminates the wired line. The network-configuration memory unit 36 stores network configuration information indicating a network configuration of the mobile network 9. In the network configuration information, information concerning a network configuration is registered among information necessary for the cell-list generating unit 34 to generate a cell list.

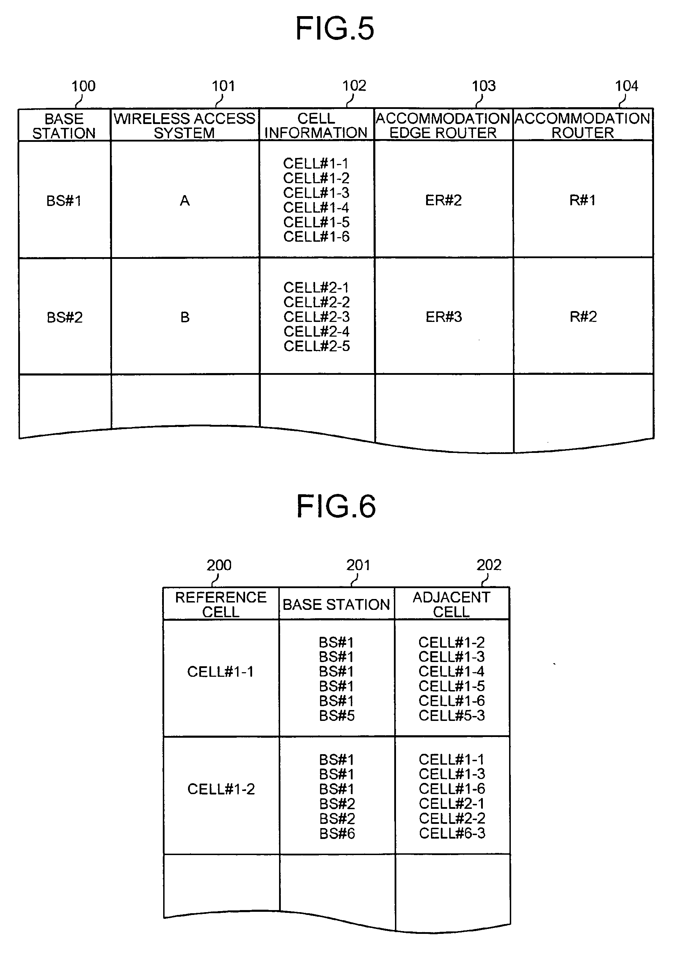

Fig. 5 is one example of a configuration of network configuration information that the network-configuration memory unit 36 shown in Fig. 4 stores. In Fig. 5, the network configuration information includes the following. Base-station identifiers that identify the base stations 2 are registered in a base station 100. Wireless access systems (including used frequencies) of the base stations 2 registered in the base station 100 are registered in a wireless access system 101. Cell identifiers for identifying the cells 11 controlled by the base stations 2 registered in the base station 100 are registered in cell information 102. Edge-router identifiers for identifying the edge routers 4 accommodating the base stations 2 registered in the base station 100 are registered in an accommodation edge router 103. Router identifiers for identifying the routers 5 accommodating the edge routers 4 registered in the accommodation edge router 103 are registered in an accommodation router 104.

In Fig. 5, by relating to a base-station identifier "BS#1" of the base station 2-1 registered in the base station 100, a wireless access system "A" is registered in the wireless access system 101, and cell identifiers "Cell#1-1 to Cell#1-6" of the cells 11-1-1 to 11-1-6 are registered in the cell information 102. An edge-router identifier "ER#2" of the edge router 4-2 is registered in the accommodation edge router 103, and a router identifier "R#1" of the router 5-1 is registered in the accommodation router 104. Further, by relating to a base-station identifier "BS#2" of the base station 2-2 registered in the base station 100, a wireless access system "B" is registered in the wireless access system 101, and cell identifiers "Cell#2-1 to Cell#2-5" of the cells 11-2-1 to 11-2-5 are registered in the cell information 102. An edge-router identifier "ER#3" of the edge router 4-3 is registered in the accommodation edge router 103, and a router identifier "R#2" of the router 5-2 is registered in the accommodation router 104. In Fig. 5, while only the base stations 2-1 and 2-2 are described, actually, each information related to the base station 2 managed by the handover control server 3 is registered.

The cell-configuration memory unit 37 stores cell configuration information of the wireless access network 6. In the cell configuration information, there is registered information concerning a configuration of the cell 11, among information necessary for the weight-function calculating unit 35 to generate a weight function, and information necessary for the cell-list generating unit 34 to generate a cell list.

Fig. 6 is one example of a configuration of cell configuration information that the cell-configuration memory unit 37 shown in Fig. 4 stores. In Fig. 6, the cell configuration information includes a reference cell 200, a base station 201, and an adjacent cell 202. Cell identifiers of the cells 11 are registered in the reference cell 200. Base-station identifiers of the base stations 2 that control the cells 11 registered in the reference cell 200 are registered in the base station 201. Cell identifiers of the cells 11 adjacent to the cells 11 registered in the reference cell 200 are registered in the adjacent cell 202.

In Fig. 6, by relating to the cell identifier "Cell#1-1" of the cell 11-1-1 registered in the reference cell 200, the base-station identifiers "BS#1" and "BS#5" of the base station 2-1 are registered in the base station 201. In the adjacent cell 202, the cell identifiers "Cell#1-2 to Cell#1-6" of the cells 11-1-2 to 11-1-6 are registered by relating to the base-station identifier "BS#1", and the cell identifier "Cell#5-3" of the cell 11-5-3 is registered by relating to the base-station identifier "BS#5".

Further, by relating to the cell identifier "Cell#1-2" of the cell 11-1-2 registered in the reference cell 200, the base-station identifiers "BS#1", "BS#2", and "BS#6" of the base stations 2-1, 2-2, and 2-6 are registered in the base station 201. In the adjacent cell 202, the cell identifiers "Cell#1-1", "Cell#1-3", and Cell#1-6" of the cells 11-1-1, 11-1-3, and 11-1-6 are registered by relating to the base-station identifier "BS#1", the cell identifiers "Cell#2-1 and "Cell#2-2" of the cells 11-2-1, and 11-2-2 are registered by relating to the base-station identifier "BS#2", and the cell identifier "Cell#6-3" of the cell 11-6-3 is registered by relating to the base-station identifier "BS#6".

In Fig. 6, while only the cells 11-1-1 and 11-1-2 are described, actually, there is registered information using the cells 11 controlled by the base stations 2 managed by the handover control server 3 within the mobile network 9 shown in Fig. 2.

The base-station-communication control unit 32 performs control concerning communications with the base station 2, and requests the base station 2 that controls the cell to be controlled by the own device, for a resource used, based on the network configuration information stored in the network-configuration memory unit 36 and the cell configuration information stored in the cell-configuration memory unit 37.

The used-resource memory unit 38 stores used-resource information to register a used resource notified from the base station 2 according to the request of the base-station-communication control unit 32. As described above, the used resources are measured for each cell controlled by the base station 2. That is, the base station 2 notifies the used resources such as the wireless resource, the wired resource, and the device resource (such as a buffering resource within the own station and a CPU using rate), relating to the measured cell identifiers.
The used-resource memory unit 38 stores the used-resource information including the base-station identifier of the base station 2 (the base station 2 that transmits the used resources) that controls the cell 11 indicated by the measured cell identifier related to the measured cell identifier.

The weight-function calculating unit 35 generates a weight function of each cell, based on a wireless access capacity notified from the mobile device 1, used-resource information stored in the used-resource memory unit 38, network configuration information stored in the network-configuration memory unit 36, and the cell configuration information stored in the cell-configuration memory unit 37. The weight function is a function for the mobile device 1 to output a peripheral-cell selection parameter to select whether to perform a handover, using the wireless-line quality as an input. The weight-function calculating unit 35 manages the weight function identifier for identifying the calculated weight function, the weight function, and the cell identifier used to calculate the weight function, by relating them to each other.

The cell-list generating unit 34 generates a cell list of the mobile device 1, based on a weight function of each cell generated by the weight-function calculating unit 35, a network configuration stored in the network-configuration memory unit 36, and a cell configuration stored in the cell-configuration memory unit 37.

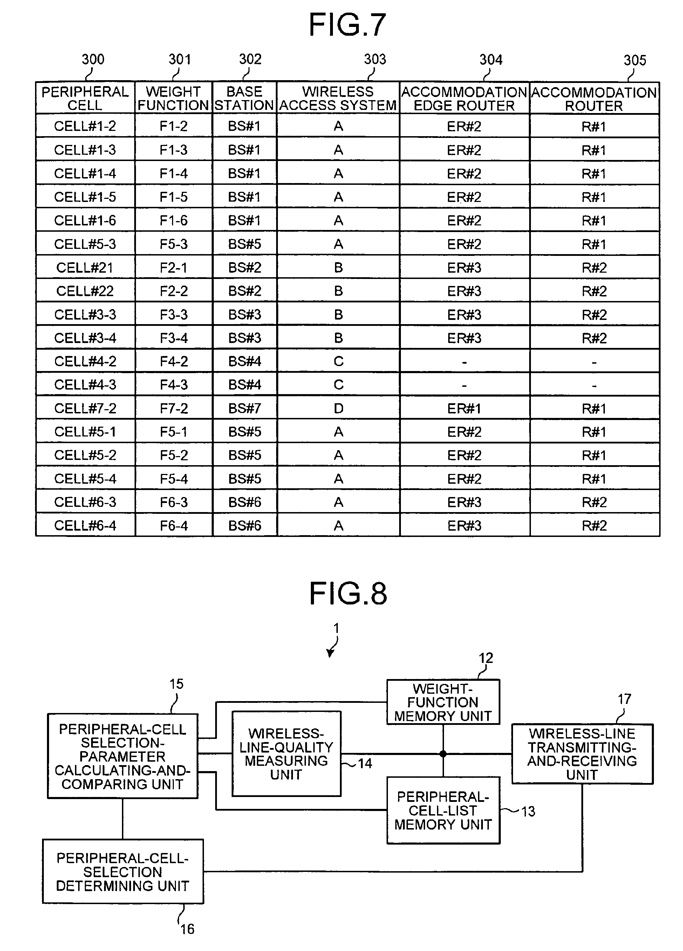

Fig. 7 is one example of a cell list generated by the cell-list generating unit 34 shown in Fig. 4. In the cell list, there are registered a peripheral cell 300, a weight function 301, a base station 302, a wireless access system 303, an accommodation edge router 304, and an accommodation router 305.

Cell identifiers of the cells 11 selected as peripheral cells are registered in the peripheral cell 300. Weight function identifiers of functions to the cells 11 registered in the peripheral cell 300 are registered in the weight function 301. Base-station identifiers of the base stations 2 that control the cells 11 registered in the peripheral cell 300 are registered in the base station 302. Wireless access systems of the base stations 2 registered in the base station 302 are registered in the wireless access system 303. Edge-router identifiers of the edge routers 4 accommodating the base stations 2 registered in the base station 302 are registered in the accommodation edge router 304. Router identifiers of the routers 5 accommodating the edge routers 4 registered in the accommodation edge router 304 are registered in the accommodation router 305.

The mobile-device-communication control unit 33 transmits a cell list generated by the cell-list generating unit 34, and weight function information including a weight function calculated by the weight-function calculating unit 35 and a weight function identifier as a set, to the mobile device 1 via the wired-line terminating unit 31 and the base station 2.

Next, a functional configuration concerning a handover process of the mobile device 1 is explained. The mobile device performs the handover based on the information registered in the cell list notified from the handover control server 3 via the base station 2, and the wireless-line quality.

Fig. 8 is a block diagram of a functional configuration concerning a handover process of a mobile device shown in Fig. 1. In Fig. 8, the mobile device 1 includes a wireless-line transmitting-and-receiving unit 17, a peripheral-cell-list memory unit 13, a weight-function memory unit 12, a wireless-line-quality measuring unit 14, a peripheral-cell selection-parameter calculating-and-comparing unit 15, and a peripheral-cell-selection determining unit 16.

The wireless-line transmitting-and-receiving unit 17 has an interface function of a wireless line connected to the base station 2, and transmits and receives a signal. The peripheral-cell-list memory unit 13 stores a cell list notified from the handover control server 3 via the base station 2. The weight-function memory unit 12 stores weight function information notified from the handover control server 3.

The wireless-line-quality measuring unit 14 measures at each predetermined cycle, a wireless-line quality of the wireless line with each cell indicated by a cell identifier within the cell list stored in the peripheral-cell-list memory unit 13. The wireless-line-quality measuring unit 14 measures the wireless-line quality of the wireless line connected to the base station 2 in communication.

The peripheral-cell selection-parameter calculating-and-comparing unit 15 calculates a peripheral-cell selection parameter of each cell, based on the wireless-line quality of each cell measured by the wireless-line-quality measuring unit 14, and the weight function information of each cell stored in the weight-function memory unit 12, and selects candidate cells of a handover destination, based on the calculated peripheral-cell selection parameter.

The peripheral-cell-selection determining unit 16 determines a cell of the handover destination from among the candidate cells of the handover destination selected by the peripheral-cell selection-parameter calculating-and-comparing unit 15, and performs the handover.

An operation of the radio communication system according to the present invention is explained next with reference to Fig. 1 to Fig. 11. An operation of the base station 2 is explained first. Upon receiving a used-resource transmission request from the handover control server 3 via the wired-line terminating unit 21, the used-resource measuring unit 22 measures a used resource of the cell 11 controlled by the own station, based on the used-resource transmission request, and transmits the measured used resource to the handover control server 3 via the wired-line terminating unit 21.

The used-resource transmission request received from the handover control server 3 includes a periodic-report request for the base station 2 to periodically report the used resource by measuring the used resource, a used-resource request for the base station 2 to report the used resource by measuring the used resource at the request time, a report request for the base station 2 to report the used resource by measuring the used resource when a wireless resource, a wired resource, and a device resource are additionally allocated to the mobile device 1, and an excess-report request for the base station 2 to periodically measure the used resource, and report the measured used resource only when the measured used resource exceeds a predetermined threshold value.

Upon receiving the periodic-report request, the used-resource measuring unit 22 measures the used resource of the cell 11 controlled by the own station at each predetermined measuring cycle or at each measuring cycle included in the periodic-report request, and transmits the measured used resource to the handover control server 3. Upon receiving the used-resource request, the used-resource measuring unit 22 measures the used resource of the cell 11 controlled by the own station, and transmits the measured used resource to the handover control server 3.

Upon receiving the report request, the used-resource measuring unit 22 measures a used resource when the base station 2 additionally allocates the wireless resource, the wired resource, and the device resource to the mobile device 1, and the used-resource measuring unit 22 transmits the measured used resource to the handover control server 3.

Upon receiving the excess-report request, the used-resource measuring unit 22 measures the used resource of the cell 11 controlled by the own station at each predetermined measuring cycle or at each measuring cycle included in the excess-report request. The used-resource measuring unit 22 determines whether the measured used resource, that is, whether the wireless resource, the wired resource, the buffering source within the own station, and the CPU using rate respectively exceed predetermined threshold values or threshold values included in the excess-report request. When at least one value exceeds the threshold value, the used-resource measuring unit 22 transmits the measured used resource to the handover control server 3.

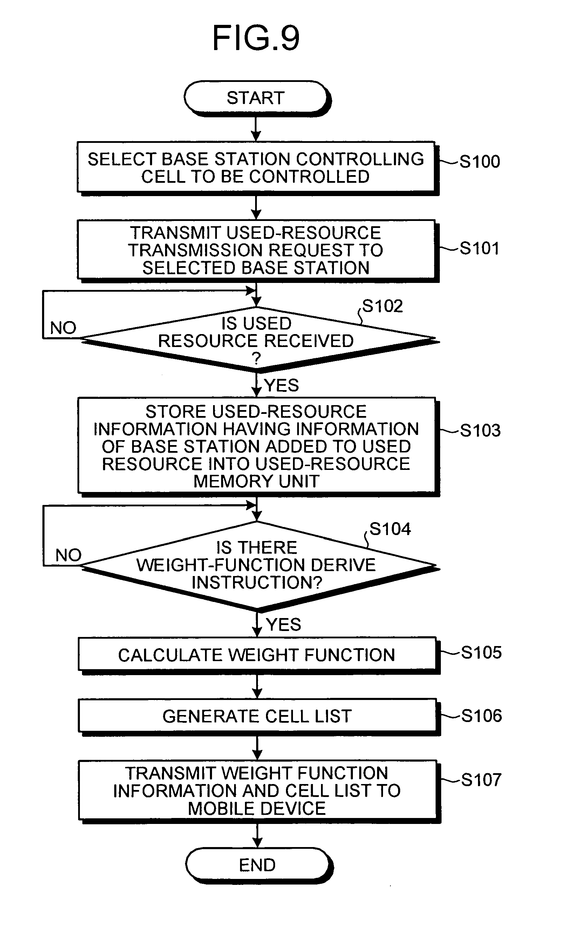

An operation of the handover control server 3 according to the first embodiment is explained next. Fig. 9 is a flowchart for explaining the operation of the handover control server according to the first embodiment. The base-station-communication control unit 32 selects the base station 2 that controls the cell to be controlled by the own device, based on the cell configuration information stored in the cell-configuration memory unit 37 (Step S100).

Specifically, a position of the mobile device 1 is registered in advance in the handover control server 3, via the base station 2. The base-station-communication control unit 32 recognizes the cell 11 in which the mobile device 1 is positioned from the position registration. Assume that the mobile device 1 is positioned in the cell 11-1-1. The base-station-communication control unit 32 searches a cell identifier registered in the reference cell 200 of the cell configuration information shown in Fig. 6, using as a search key the cell identifier "Cell#1-1" indicating the cell 11-1-1 in which the mobile device 1 is positioned, and obtains the base-station identifier and the cell identifier of the adjacent cell registered by relating to the search key. In this example, the base-station identifiers "BS#1" and "BS#5", and the cell identifiers of the adjacent cells "Cell#1-2 to Cell#1-6" and "Cell#5-3" are obtained.

The base-station-communication control unit 32 is set in advance with information concerning the peripheral cells selected as peripheral cells. The information concerning the peripheral cells is the information for selecting a range of adjacent cells as peripheral cells, from the position at which the mobile device 1 is positioned. When the information concerning the peripheral cells is one adjacency, the base-station-communication control unit 32 selects as peripheral cells the cells 11-1-2 to 11-1-6, and 11-5-3 (see Fig. 2) adjacent to the cell 11-1-1 in which the mobile device 1 is positioned. That is, the adjacent cell 101 registered by relating to the reference cell 200 of the cell configuration information shown in Fig. 6 becomes the peripheral cell.

When the information concerning the peripheral cells is two adjacencies, the base-station-communication control unit 32 selects as peripheral cells the cells 11-1-2 to 11-1-6, and 11-5-3 adjacent to the cell 11-1-1 in which the mobile device 1 is positioned, and the cells 11-2-1, 11-2-2, 11-3-3, 11-3-4, 11-4-2, 11-4-3, 11-5-1, 11-5-2, 11-5-4, 11-6-3, 11-6-4, and 11-7-2 (see Fig. 2) adjacent to the cells 11-1-2 to 11-1-6, and 11-5-3. That is, the base-station-communication control unit 32 searches the reference cell 200 using as search keys the cell identifiers registered in the adjacent cell 202 obtained using as the search key the cell 11 at which the mobile device 1 is positioned, obtains the base-station identifiers and the cell identifiers registered in the base station 201 and in the adjacent cell 2002 relating to the reference cell 200 coinciding with the search keys, and selects all the obtained cell identifiers (when there are redundant cell identifier, one cell identifier is selected) as peripheral cells.

The base-station-communication control unit 32 transmits the used-resource transmission request to the base station 2 that controls the selected peripheral cells via the wired-line terminating unit 31, that is, the base station 2 indicated by the base-station identifier obtained from the cell configuration information (Step 5101).

Upon receiving the used resource from the base station 2 via the wired-line terminating unit 31, the base-station-communication control unit 32 stores the used-resource information including information of the base station 2 added to the received used resource, into the used-resource memory unit 38 (Steps S102, S103).

The mobile-device-communication control unit 33 detects, based on the position registration of the mobile device 1, that the mobile device 1 starts communications and sets the wireless line in a specific cell, or the mobile device 1 moves (hands over) to a different cell and the adjacent cells of the mobile device 1 are changed. The mobile-device-communication control unit 33 collects the used-resource information from the base station 2 that controls the peripheral cells of the mobile device 1 by the operation at the above Steps S100 to S103, and outputs a weight-function derive instruction to the mobile device 1, to the weight-function calculating unit 35.

Upon receiving the weight-function derive instruction, the weight-function calculating unit 35 generates a weight function of each cell, based on the wireless access capacity notified from the mobile device 1, the used-resource information stored in the used-resource memory unit 38, the network configuration information stored in the network-configuration memory unit 36, and the cell configuration information stored in the cell-configuration memory unit 37 (Steps S104, S105).

Specifically, the weight-function calculating unit 35 calculates the weight function for weighting the wireless-line quality at the time of selecting a cell to be handed over, based on the used resource of each cell in the used-resource information, a wired access system, and performance and using state of the accommodation edge router and the accommodation router registered in the network configuration information related to the base station 2 that controls the cell, and a positional relationship between the cell 11 in which the mobile device 1 is positioned and the cell for calculating the weight function (whether the one adjacency or the two adjacencies) from the cell configuration information.

The weight-function calculating unit 35 relates the weight function information including as a set the calculated weight function and the weight function for identifying this weight function, to the cell identifier of the cell whose weight function is calculated, and notifies this related information to the cell-list generating unit 34. At the time of notifying this weight function information to the cell-list generating unit 34, the weight-function calculating unit 35 determines whether the cells are suitable as the peripheral cells. When the cells are determined unsuitable as the peripheral cells, the weight-function calculating unit 35 uses a code different from the weight function such as "Null", for the weight function, for example.

The peripheral cells are not suitable as the peripheral cells when the wireless access system of the base station 2 controlling the cell in which the mobile device 1 is positioned is the same as the wireless access system of the base station 2 controlling the adjacent cells among the cells selected as the peripheral cells, and also when there is a cell of which free area (used resource) is larger than a predetermined threshold value, when the wireless access system of the cell in which the mobile device 1 is positioned is different among the cells selected as the peripheral cells.

A wireless access capacity, a resource amount necessary for communications, and communication quality, respectively of the mobile device 1 necessary at the time of establishing communications are notified from the mobile device 1 to the handover control server 3, and these pieces of information are registered in the handover control server 3. The weight-function calculating unit 35 determines whether the cells are suitable as the peripheral cells, based on these pieces of information. The wireless access capacity is a wireless access system and a frequency that the mobile device 1 can use. The resource amount necessary for communications is a wireless band and a wired band minimum necessary as the resource amount. The communication quality is a bit error rate and a delay quality.

Whether the cells are suitable as the peripheral cells is determined based on the wireless access capacity of the mobile device 1, the resource amount and the communication quality necessary for communications, used-resource information, the cell configuration information, and the network configuration information. After whether the cells are suitable as the peripheral cells is determined, a weight function can be generated to only the peripheral cells suitable as the peripheral cells.

The cell-list generating unit 34 generates a cell list (see Fig. 7), based on the weight function information and the cell identifier notified from the weight-function calculating unit 35, the network configuration information stored in the network-configuration memory unit 36, and the cell configuration information stored in the cell-configuration memory unit 37 (Step S106).

Specifically, the cell-list generating unit 34 registers the cell identifier related to the weight function information notified from the weight-function calculating unit 35, into the peripheral cell 300, and registers the weight function identifier within the weight function information into the weight function 301. The cell-list generating unit 34 searches the adjacent cell 202 of the cell configuration information, using the cell identifier registered in the peripheral cell 300 as a search key, and obtains a base-station identifier registered in the base station 201 by relating to the adjacent cell 202 coinciding with the search key. The cell-list generating unit 34 registers the obtained base-station identifier into the base station 302.

Further, the cell-list generating unit 34 searches the base station 100 of the network configuration information, using the obtained base-station identifier as a search key, and obtains a wireless access system, an accommodation edge-router identifier, and an accommodation router identifier registered relating to the base station 100 coinciding with the search key. The cell-list generating unit 34 registers the obtained wireless access system into the wireless access system 303, registers the obtained accommodation edge-router identifier into the accommodation edge router 304, and registers the obtained accommodation router identifier into the accommodation router 305.

For each weight function information and each cell identifier notified from the weight-function calculating unit 35, the cell-list generating unit 34 generates a cell list based on the weight function information and the cell identifier notified from the weight-function calculating unit 35, the network configuration information stored in the network-configuration memory unit 36, and the cell configuration information stored in the cell-configuration memory unit 37. The cell-list generating unit 34 does not register the weight function information including the weight function "Null", into the cell list.

The cell-list generating unit 34 transmits the weight function information notified from the weight-function calculating unit 35 and the generated cell list, to the mobile device 1, via the wired-line terminating unit 31 and the base station 2 (Step S107).

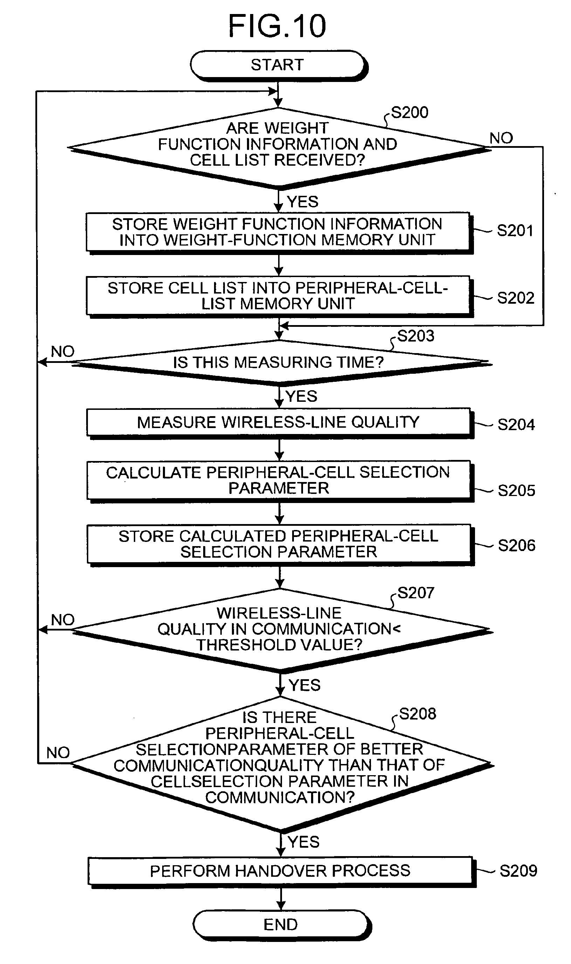

An operation of the mobile device 1 according to the first embodiment is explained next. Fig. 10 is a flowchart for explaining the operation of the mobile device 1 according to the first embodiment. The mobile device 1 receives the weight function information and the cell list from the handover control server 3 via the wireless-line transmitting-and-receiving unit 17 (Step S200), stores the received weight function information into the weight-function memory unit 12 (Step S201), and stores the received cell list into the peripheral-cell-list memory unit 13 (Step S202).

At a predetermined measuring time, the wireless-line-quality measuring unit 14 measures a wireless-line quality of each cell indicated by a cell identifier registered in the peripheral cell 300 of the cell list stored in the peripheral-cell-list memory unit 13 (Steps S203, S204). The wireless-line-quality measuring unit 14 notifies the measured wireless-line quality of each cell to the peripheral-cell selection-parameter calculating-and-comparing unit 15, by relating to the cell identifier.

The peripheral-cell selection-parameter calculating-and-comparing unit 15 calculates a peripheral-cell selection parameter, based on the wireless-line quality measured by the wireless-line-quality measuring unit 14, the cell list stored in the peripheral-cell-list memory unit 13, and the weight function information stored in the weight-function memory unit 12 (Step S205).

Specifically, the peripheral-cell selection-parameter calculating-and-comparing unit 15 searches the peripheral cell 300 of the cell list, using as a search key, the cell identifier to which the wireless-line quality notified from the wireless-line-quality measuring unit 14 is related, and obtains a weight function identifier registered in the weight function 301 relating to the peripheral cell 300 coincided with the search key.

The peripheral-cell selection-parameter calculating-and-comparing unit 15 searches a weight function identifier of the weight function information stored in the weight-function memory unit 12, using the obtained weight function identifier as a search key, and obtains a weight function registered relating to the weight function identifier coincided with the search key. The peripheral-cell selection-parameter calculating-and-comparing unit 15 calculates a peripheral-cell selection parameter of the cell by substituting the wireless-line quality notified from the wireless-line-quality measuring unit 14, into the obtained weight function. The peripheral-cell selection-parameter calculating-and-comparing unit 15 stores the peripheral-cell selection parameter calculated by relating to the cell identifiers of the peripheral cells (Step S206).

The peripheral-cell selection-parameter calculating-and-comparing unit 15 compares the wireless-line quality of the wireless line with the cell 11 currently in communication, with a predetermined threshold value (Step 5207). When the wireless-line quality of the wireless line with the cell 11 currently in communication is smaller than the predetermined threshold value, that is, when the wireless-line quality of the wireless line with the cell 11 currently in communication cannot satisfy the predetermined value, the peripheral-cell selection-parameter calculating-and-comparing unit 15 outputs a peripheral-cell selection instruction to the peripheral-cell-selection determining unit 16.

Upon receiving the peripheral-cell selection instruction, the peripheral-cell-selection determining unit 16 determines whether there is a peripheral-cell selection parameter having a better communication quality than that of the selection parameter of the cell 11 currently in communication, among the peripheral-cell selection parameters stored in the peripheral-cell selection-parameter calculating-and-comparing unit 15 (Step S208). When it is determined that there is a peripheral-cell selection parameter having a better communication quality than that of the selection parameter of the cell 11 currently in communication, the peripheral-cell-selection determining unit 16 selects the peripheral-cell selection parameter having a better communication quality than that of the selection parameter of the cell 11 currently in communication. When there are plural peripheral-cell selection parameters having better communication qualities than that of the selection parameter of the cell 11 currently in communication, the peripheral-cell-selection determining unit 16 selects a peripheral-cell selection parameter having the best communication quality from among the peripheral-cell selection parameters.

The peripheral-cell-selection determining unit 16 determines the cell 11 having the selected peripheral-cell selection parameter, as the cell to be handed over. The peripheral-cell-selection determining unit 16 searches the peripheral cell 300 of the cell list stored in the peripheral-cell-list memory unit 13, using the cell identifier indicating the determined cell, as a search key. The peripheral-cell-selection determining unit 16 obtains a base-station identifier, a wireless access system, an accommodation edge-router identifier, and an accommodation router identifier registered relating to the cell identifier coinciding with the search key, and performs the handover process (Step S209).

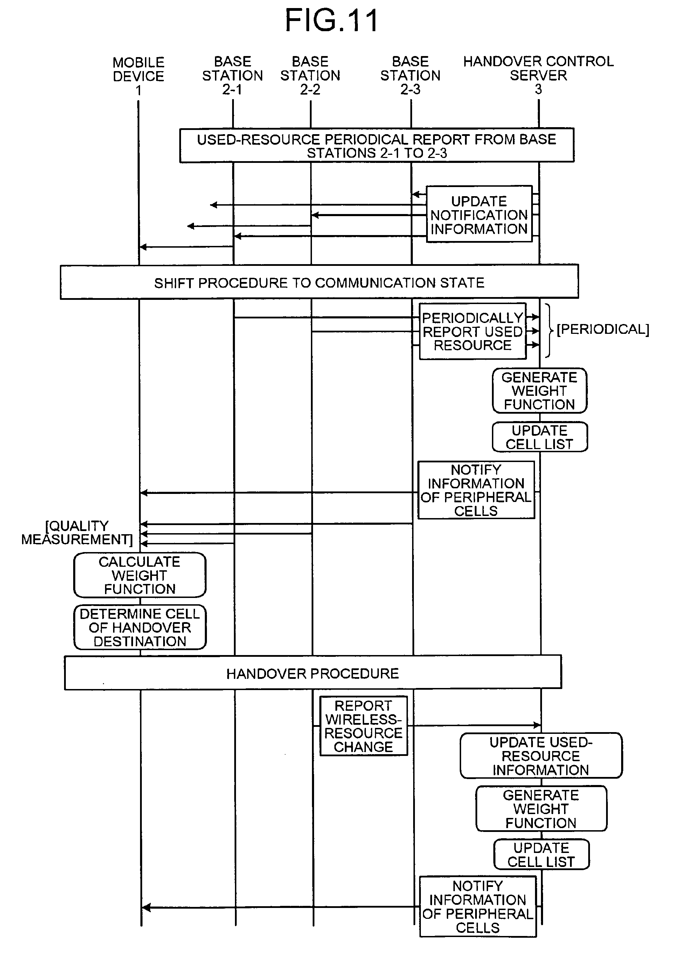

An operation of the radio communication system according to the first embodiment of the present invention is explained next with reference to a sequence diagram of Fig. 11. In Fig. 11, while the number of the base stations 2 is three (the base stations 2-1 to 2-3), the number of the base stations 2 is not limited to this. The base stations 2-1 to 2-3 receive a periodic report request, and report the used resource to the handover control server 3 by periodically measuring the used resource.

When the mobile device 1 is not communicating, that is, when the mobile device 1 is not connected to the base stations 2-1 to 2-3, the handover control server 3 notifies the information (the weight function information and the cell list) of the peripheral cell in a cell unit, via the base stations 2-1 to 2-3. In this case, because the mobile device 1 is not communicating, the capacity and the communication quality of the mobile device 1 cannot be obtained. Therefore, the handover control server 3 calculates the weight function by determining from the wireless access system and the frequency of the peripheral cell, and the number of used resources of the base stations 2-1 to 2-3. When the mobile device 1 is not communicating, it can be arranged such that the weight function within the information of the peripheral cell to be notified is not set.

The base stations 2-1 to 2-3 receive the periodic report request from the handover control server 3, and periodically report the used resource to the handover control server 3. Upon receiving the periodic report, the handover control server 3 updates the notification information (information of the peripheral cell), and notifies this updated information via the base stations 2-1 to 2-3.

The mobile device 1 performs a shift procedure of a shift to the communication state. In this example, the mobile device 1 becomes in the communication state, by establishing a communication in the cell 11-1-1 that is controlled by the base station 2-1. To establish a communication, a communication establishment procedure in a general mobile network is used. At the time of establish a communication, the mobile device 1 registers a wireless access capacity, a resource amount necessary for the communication and the communication quality of the mobile device 1, to the handover control server 3.

The base stations 2-1 to 2-3 receive the periodic report request from the handover control server 3, and periodically report the used resource to the handover control server 3. The handover control server 3 stores the used-resource information added with the base-station identifiers of the base stations 2-1 to 2-3, into the used resource periodically reported from the base stations 2-1 to 2-3. The handover control server 3 generates the weight function of each cell, based on the used-resource information, the network configuration information, and the cell configuration information. The handover control server 3 generates weight function information including the generated weight function related to the weight function identifier of the weight function.

The handover control server 3 selects a peripheral cell from, the wireless access capacity, the resource amount and the communication quality necessary for communication received from the mobile device 1, the used resources reported from the base stations 2-1 to 2-3, and the wireless access capacity (the wireless access system and the frequency) of the peripheral cell obtained from the network configuration information.

The handover control server 3 updates the cell list, based on the selected peripheral cell, the network configuration information, the cell configuration information, and the weight function information. The handover control server 3 notifies the updated cell list and the weight function information to the mobile device 1 as the information of the peripheral cell.

When a desired communication quality cannot be obtained in the wireless-line quality of the wireless line with the cell 11-1-1 currently in communication, the mobile device 1 measures a wireless-line quality of the wireless line with the peripheral cell based on the cell list within the information of the peripheral cell notified from the handover control server 3, performs the weight function calculation of each cell, using as input values the measured wireless-line quality and the wireless-line quality of the wireless line with the cell 11-1-1 currently in communication, and calculates the peripheral-cell selection parameter.

When there is a peripheral-cell selection parameter of a better quality than that of the peripheral-cell selection parameter of the cell 11-1-1 currently in communication, the mobile device 1 determines as the cell of the handover destination, the cell having the peripheral-cell selection parameter of the better quality than that of the peripheral-cell selection parameter of the cell 11-1-1 currently in communication, and performs a predetermined handover procedure. In this example, it is assumed that the mobile device 1 hands over from the base station 2-1 that controls the cell 11-1-1, to the cell that the base station 2-2 controls.

When the handover procedure is performed, the base station 2-2 that controls the cell of the handover destination has a changed number of the wireless resources used. Therefore, the base station 2-2 reports to the handover control server 3 that the wireless resources are changed. A wireless-resource change report for notifying a change of the wireless resources is different from the periodic report, and is notified when the wireless resources are changed.

Upon receiving the wireless-resource change report, the handover control server 3 updates the used-resource information, generates a weight function using the updated used-resource information, and updates the weight function information and the cell list. The handover control server 3 notifies the information of the peripheral cell including the updated weight function information and the updated cell list, to the mobile device 1.

As explained above, in the first embodiment, the handover control server 3 calculates a weight function of each peripheral cell of a cell in which the mobile device 1 is communicating, based on network configuration information and cell configuration information of the radio communication system, wireless access capacity of the mobile device 1, and a used resource of each cell measured by each base station 2, notifies to the mobile device 1, weight function information including the calculated weight function and a weight function identifier for identifying the weight function as a set, generates a cell list registered with information concerning the weight function identifiers of the peripheral cells related to the peripheral cells, a base station controlling the peripheral cell, a wireless access system of the base station, an edge router accommodating the base station, and a router for identifying the edge router, based on the weight function information, the network configuration information, and the cell configuration information, and notifies the generated cell list to the mobile device 1, and the mobile device 1 measures wireless-line qualities of the peripheral cells registered in the cell list notified from the handover control server 3 and the cell currently connected, calculates a peripheral-cell selection parameter using the measured wireless-line qualities, and the weight function information and the cell list notified from the handover control server 3, and determines a cell of a handover destination.

That is, the handover control server 3 notifies to the mobile device 1 a weight function taking into consideration the wireless access capacity of the mobile device, the used resource of the base station, and the wireless-line quality. Accordingly, the mobile device 1 can flexibly determine a cell of the handover destination according to the level of the wireless-line quality measured by the mobile device 1.

In the first embodiment, it is explained as an example that the handover control server 3 receives the report of the used resource from the base station 2, selects the peripheral cell, calculates a weight function in the peripheral cell unit, and notifies the result to the mobile device 1. Alternately, the functions of the handover control server 3 can be installed on the plural base stations 2 in distribution, by grouping the base stations 2, thereby achieving the same functions as those of the first embodiment.

Specifically, the base stations 2 within the radio communication system are grouped in advance, and one of the base stations 2 within the group is added to the functions of the base station 2 in the first embodiment, thereby providing the base station 2 having the server function, having the function of the handover control server further including the network-configuration memory unit 36, the cell-configuration memory unit 37, the used-resource memory unit 38, the weight-function calculating unit 35, and the cell-list generating unit 34, of the handover control server 3.

The base station 2 having the server function transmits a used-resource transmission request to the base station 2 within the group in which the own station is present, collects the used resource from the base station 2 within the group, generates used-resource information including a base-station identifier added to the collected used resource, and generates weight function information and a cell list by selecting a peripheral cell among the cells controlled by the base station 2 within the group. The base station 2 having the server function notifies the generated weight function information and the cell list to the mobile device 1.

When the base station 2 having a server function generates weight function information and a cell list by selecting a peripheral cell among the cells controlled by the base station 2 within the group in which the own station is present, process load of generating the weight function information and the cell list can be dispersed.

In the first embodiment, when the wireless-line quality of the wireless line with the cell 11 currently in communication is smaller than the predetermined threshold value, the peripheral-cell selection-parameter calculating-and-comparing unit 15 of the mobile device 1 calculates a peripheral-cell selection-parameter, and the peripheral-cell-selection determining unit 16 determines a cell of the handover destination based on the peripheral-cell selection-parameter calculated by the peripheral-cell selection-parameter calculating-and-comparing unit 15. Alternately, the peripheral-cell selection-parameter calculating-and-comparing unit 15 can calculate the peripheral-cell selection-parameter without comparing the wireless-line quality of the wireless line with the cell currently in communication, with a predetermined threshold value, and the peripheral-cell-selection determining unit 16 can determine as the cell of the handover destination, the peripheral cell having a better communication quality than that of the peripheral-cell selection parameter of the cell currently in communication.

### Second Embodiment.

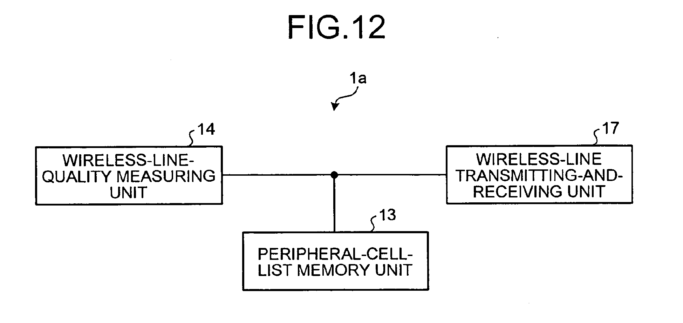

A second embodiment of the present invention is explained with reference to Fig. 12 to Fig. 14. In the first embodiment, the mobile device 1 determines a cell of the handover destination. However, in the second embodiment, the handover control server 3 determines a cell of the handover destination.

A radio communication system according to the second embodiment includes a mobile device 1a and a handover control server 3a, in place of the mobile device 1 and the handover control server 3 of the radio communication system according to the first embodiment shown in Fig. 1.

Fig. 12 is a block diagram of a functional configuration concerning a handover process of a mobile device according to the second embodiment. The mobile device 1a shown in Fig. 12 excludes the weight-function memory unit 12, the peripheral-cell selection-parameter calculating-and-comparing unit 15, and the peripheral-cell-selection determining unit 16 of the mobile device 1 in the first embodiment shown in Fig. 4. Constituent elements having the same functions as those of the mobile device 1 in the first embodiment shown in Fig. 4 are denoted by like reference numerals, and redundant explanations thereof will be omitted.

The wireless-line-quality measuring unit 14 measures the wireless-line quality of the wireless line with the cell indicated by the cell identifier registered in the peripheral cell 300 of the cell list stored in the peripheral-cell-list memory unit 13. Thereafter, the wireless-line-quality measuring unit 14 notifies to the handover control server 3a the measured wireless-line quality (including the wireless-line quality of the wireless line with the cell in communication) via the wireless-line transmitting-and-receiving unit 17 and the base station 2.

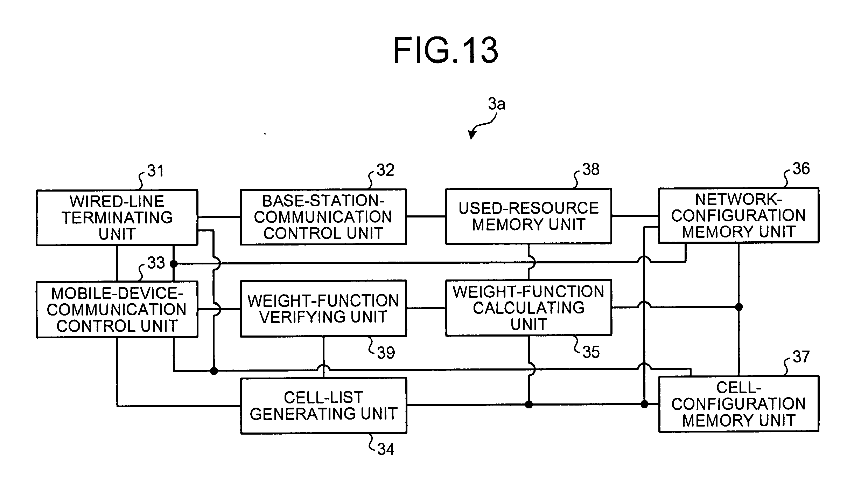

Fig. 13 is a block diagram of a functional configuration concerning a handover process of the handover control server 3a. The handover control server 3a shown in Fig. 13 includes a weight-function verifying unit 39 added to the handover control server 3 according to the first embodiment shown in Fig. 4. Constituent elements having the same functions as those of the handover control server 3 in the first embodiment shown in Fig. 4 are denoted by like reference numerals, and redundant explanations thereof will be omitted.

The weight-function verifying unit 39 calculates a peripheral-cell selection parameter based on the wireless-line quality notified from the mobile device 1a, the weight function calculated by the weight-function calculating unit 35, and the cell list generated by the cell-list generating unit 34, and determines a cell of the handover destination based on the calculated peripheral-cell parameter. That is, the weight-function verifying unit 39 has functions similar to those of the peripheral-cell selection-parameter calculating-and-comparing unit 15 and the peripheral-cell-selection determining unit 16.

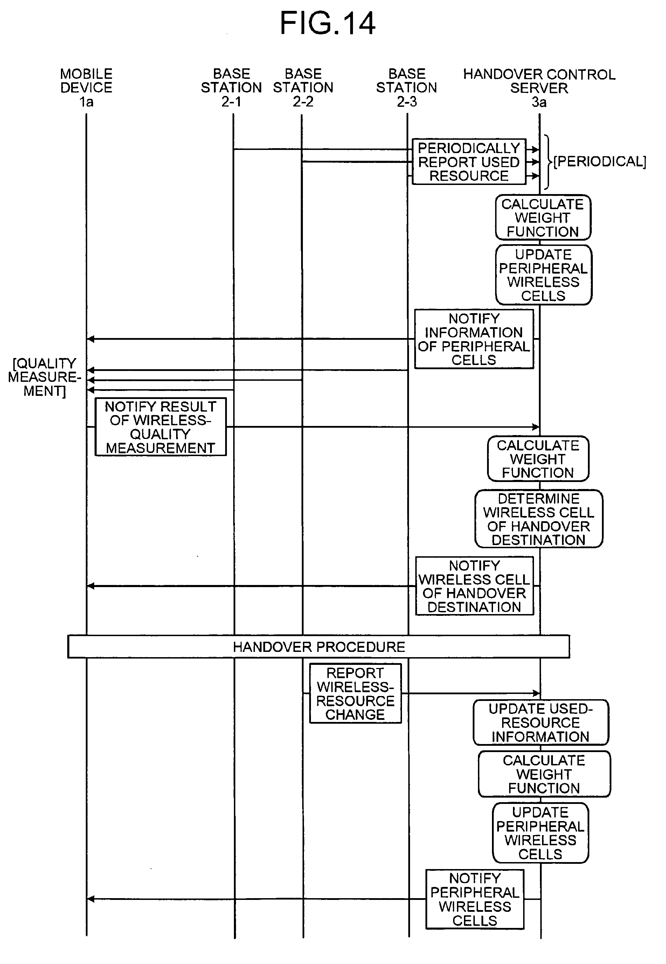

An operation of the radio communication system according to the second embodiment is explained next with reference to a sequence diagram shown in Fig. 14. The operation until when the mobile device 1a becomes in the communication state is substantially the same as that of the radio communication system in the first embodiment explained above with reference to the sequence diagram in Fig. 11, and different points are as follows. In the radio communication system according to the first embodiment, the handover control server 3 notifies the cell list and the weight function information as the information of the peripheral cell. On the other hand, in the radio communication system according to the second embodiment, the handover control server 3a notifies only the cell list as the information of the peripheral cell. Therefore, the operation until when the mobile device 1a becomes in the communication state is omitted.

The base stations 2-1 to 2-3 receive a periodical report request from the handover control server 3a, and periodically report a used resource to the handover control server 3. The handover control server 3a stores the used-resource information including the base-station identifiers of the base stations 2-1 to 2-3 added to the used resources periodically reported from the base stations 2-1 to 2-3. The handover control server 3a generates a weight function of each cell, based on the used-resource information, the network-configuration information, and the cell configuration information. The handover control server 3a stores weight function information, by relating the calculated weight function and the weight function identifier of the weight function to each other.

The handover control server 3a selects a peripheral cell, from the wireless access capacity received from the mobile device 1a when in the communication state, the resource amount and the communication quality necessary for communication, the used resources reported from the base stations 2-1 to 2-3, and the wireless access capacity (the wireless access system and the frequency) of the peripheral cells obtained from the network configuration information.

The handover control server 3a updates the cell list based on the selected peripheral cell, the network configuration information, the cell configuration information, and the weight function information. The handover control server 3a notifies the updated cell list to the mobile device 1a as the information of the peripheral cells.

The mobile device 1a measures the wireless-line qualities of the peripheral cells, based on the cell list in the information of the peripheral cells notified from the handover control server 3a, and notifies a wireless-quality measurement-result notice to the handover control server 3a, by relating the measured wireless-line qualities and the wireless-line quality of the cell 11-1-1 currently in communication to the respective cell identifiers.

Upon receiving the wireless-line-quality measurement-result notice, the handover control server 3a determines a cell of the handover destination, based on the wireless-line-quality measurement-result notice, the weight function information, and the cell list.

Specifically, when the wireless-line quality of the cell 11-1-1 in which the mobile device 1a is currently in communication is smaller than a predetermined threshold value, that is, when the wireless-line quality of the wireless line with the cell 11 in communication cannot satisfy the predetermined value, the weight-function verifying unit 39 shown in Fig. 13 searches the peripheral cell 300 of the cell list (see Fig. 7) generated by the cell-list generating unit 34 using the cell identifier of the wireless-line-quality measurement-result notice as a search key, thereby obtaining a weight function identifier registered in the weight function 301 related to the peripheral cell 300 coinciding with the search key.

The weight-function verifying unit 39 searches the weight identifier of the weight function information stored in the weight-function calculating unit 35 using the obtained weight-function identifier as a search key, thereby obtaining a weight function registered relating to the identifier coinciding with the search key. The weight-function verifying unit 39 calculates a peripheral-cell selection parameter of the cell, by substituting into the obtained weight function, the wireless line quality of the wireless-line-quality measurement-result notice related to the cell identifier used as the search key.

The weight-function verifying unit 39 calculates a peripheral-cell selection parameter of each cell, and a peripheral-cell selection parameter of the cell 11-1-1 in which the mobile device 1a is in communication, using all cell identifiers within the wireless-line-quality measurement-result notice as a search key. Thereafter, the weight-function verifying unit 39 determines whether there is a peripheral-cell selection parameter having a better communication quality than that of the selection parameter of the cell 11 currently in communication, among the calculated peripheral-cell selection parameters.

When it is determined that there is a peripheral-cell selection parameter having a better communication quality than that of the selection parameter of the cell 11-1-1 in which the mobile device 1a is currently in communication, the weight-function verifying unit 39 selects the peripheral-cell selection parameter having a better communication quality than that of the selection parameter of the cell 11-1-1 in which the mobile device 1a is currently in communication, and determines that the cell 11 having the selected peripheral-cell selection parameter as the cell of the handover destination.

The handover control server 3a notifies a handover-destination cell notification including the cell identifier of the determined cell of the handover destination, to the mobile device 1a. Upon receiving the handover-destination cell notification, the mobile device 1a performs the handover procedure, using the cell indicated by the cell identifier within the handover-destination cell notification, as the cell of the handover destination. In this example, the mobile device 1a hands over from the base station 2-1 controlling the cell 11-1-1 to the cell controlled by the base station 2-2.

When the handover procedure is performed, the base station 2-2 controlling the cell of the handover destination has a changed number of the wireless resources used, and reports to the handover control server 3a that the wireless resources are changed.

Upon receiving the wireless-resource change report, the handover control server 3a updates the used-resource information, generates a weight function using the updated used-resource information, and updates the weight function information and the cell list. The handover control server 3a notifies the information of the peripheral cell including the updated cell list, to the mobile device 1a.

As explained above, in the second embodiment, the handover control server 3a calculates a weight function of each peripheral cell of a cell in which the mobile device 1a is communicating, based on network configuration information and cell configuration information of the radio communication system, wireless access capacity of the mobile device 1a, and a used resource of each cell measured by each base station 2, generates weight function information including the calculated weight function and a weight function identifier for identifying the weight function as a set, generates a cell list registered with information concerning the weight function identifiers of the peripheral cells related to the peripheral cells, a base station controlling the peripheral cell, a wireless access system of the base station, an edge router accommodating the base station, and a router for identifying the edge router, based on the weight function information, the network configuration information, and the cell configuration information, and notifies the generated cell list to the mobile device, and the mobile device 1a measures wireless-line qualities of the peripheral cells registered in the cell list notified from the handover control server 3 and the cell currently connected, calculates a peripheral-cell selection parameter using the wireless-line qualities, and the weight function information and the cell list notified from the handover control server 3a, and determines a cell of a handover destination. Accordingly, the mobile device 1a can flexibly determine a cell of the handover destination according to the level of the wireless-line quality measured by the mobile device 1a.

In the second embodiment, when the wireless-line quality of the wireless line with the cell currently in communication is smaller than the predetermined threshold value, the weight-function verifying unit 39 of the handover control server 3a calculates a peripheral-cell selection-parameter, and determines a cell of the handover destination, based on the calculated peripheral-cell selection-parameter. Alternately, the weight-function verifying unit 39 of the handover control server 3a can calculate the peripheral-cell selection-parameter without comparing the wireless-line quality of the wireless line with the cell currently in communication, with a predetermined threshold value, and can determine as the cell of the handover destination, the peripheral cell having a better communication quality than that of the peripheral-cell selection parameter of the cell currently in communication.

In the second embodiment, the handover control server 3a calculates the peripheral-cell selection parameter using the wireless-line quality of each peripheral cell notified from the mobile device 1a. Therefore, as the information of the cell list to be notified to the mobile device 1a, it is sufficient that the information of the peripheral cell of which wireless-line quality is to be measured is included. Therefore, it can be arranged such that the cell-list generating unit 34 of the handover control server 3a notifies to the mobile device 1a only the cell identifiers of the peripheral cell in the generated cell list and the base-station identifier of the base station 2 that controls the peripheral cells. Accordingly, the amount of information that the handover control server 3a needs to notify to the mobile device 1a can be decreased.

It is explained as an example that the handover control server 3a according to the second embodiment receives the report of the used resource from the base station 2, selects the peripheral cell, calculates a weight function in the peripheral cell unit, and notifies the result to the mobile device 1a. Alternately, the functions of the handover control server 3a can be installed on the base stations 2 in distribution, by grouping the base stations 2, thereby achieving the functions of the second embodiment.

Specifically, the base stations 2 within the radio communication system are grouped in advance, and one of the base stations 2 within the group is added to the functions of the base station 2 in the second embodiment, thereby providing the base station 2 having the server function, having the function of the handover control server further including the network-configuration memory unit 36, the cell-configuration memory unit 37, the used-resource memory unit 38, the weight-function calculating unit 35, the cell-list generating unit 34, and the weight-function verifying unit 39 of the handover control server 3a.

In this case, it can be arranged as follows.
Each base station 2 having the server function exchanges the peripheral-cell selection parameter of the cell determined by the own station, and the base station 2 having the server function that determines the cell of the peripheral-cell selection parameter having the best communication quality as the cell of the handover destination notifies the handover-destination cell notification to the mobile device 1a. A master station of the base station 2 having the server function is assigned in advance. The base station 2 having the server function other than the master station notifies the cell determined by the own station as the handover destination and the peripheral-cell selection parameter of this cell, to the master station. The base station 2 having the server function as the master station finally determines a cell of the handover destination, and notifies the handover-destination cell notification to the mobile device 1a.

As explained above, the base station 2 having the server function selects the peripheral cell among the cells controlled by the base station 2 within the group in which the own station is present, generates the weight function information and the cell list, and calculates the peripheral-cell selection parameter. As a result, the processing load of generating the weight function information and the cell list, and the processing load of calculating the peripheral-cell selection parameter can be dispersed.

### Third Embodiment.

In the first and second embodiments, peripheral cells are selected for only adjacent cells. In the cell configuration shown in Fig. 2, when the mobile device 1 or the mobile device 1a is positioned in the cell 11-1-1 and when selecting two adjacencies as the peripheral cells, 18 cells are selected including the cells 11-1-2 to 11-1-6, 11-2-1, 11-2-2, 11-3-3, 11-3-4, 11-4-2, 11-4-3, 11-5-1 to 11-5-4, 11-6-3, 11-6-4, and 11-7-2. In this case, cells having a different wireless access system and a different usable frequency are also selected as peripheral cells, and a cell list shown in Fig. 7 is generated.

In performing the handover to the cell having a different used frequency and a different used wireless-access system, a disconnection time of the wireless line necessary for the handover increases. Therefore, the cell having this problem is desired to be excluded from the cell of the handover destination. On the other hand, the frequency-using efficiency is degraded due to the traffic concentration in a specific frequency or a specific wireless access system. To avoid this situation, in the first and second embodiments, the weight function is changed depending on the used frequency, the used wireless access system, and the used resource of the cell.

However, measuring wireless-line qualities of different frequencies and different wireless access systems also has a problem that the processing load of the mobile device 1 or the mobile device 1a becomes large. Therefore, it is desirable to exclude a cell having a different wireless line of the wireless access system and a different frequency from those of the cell to be measured, and exclude a cell using many wireless resources and having a small possibility of being selected, from the peripheral cells, and notify the result to the mobile device 1 or the mobile device 1a.

Therefore, in a third embodiment of the present invention, the handover control server 3 or the handover control server 3a according to the first or second embodiment has a function of generating a cell list by excluding from the peripheral cells, a cell having a wireless line of a different frequency or a different wireless access system from those of the cell to be measured, and a cell using many wireless resources and having a small possibility of being selected, from the peripheral cells.

Specifically, in the case of the handover control server 3a according to the second embodiment, for example, the weight-function verifying unit 39 is further set with an estimate wireless-line quality of a wireless-line measurement result of the mobile device 1, and additionally has a function of notifying a cell identifier of a cell of which calculation result (peripheral-cell selection parameter) obtained as the input value is equal to or smaller than a predetermined peripheral-cell-selection threshold value.

In the case of the handover control server 3 according to the first embodiment, the weight-function verifying unit 39 has only the function of the weight-function verifying unit 39 according to the third embodiment.

The cell-list generating unit 34 generates a cell list by excluding the cell identifier notified from the weight-function verifying unit 39.

The mobile device 1a measures the wireless-line quality of the cell indicated by the cell identifier registered in the peripheral cell 300 of the cell list notified from the handover control server 3a. Therefore, there is no operation of measuring wireless-line qualities of a cell having a different frequency and a different wireless access system and a cell using many wireless resources and having a small possibility of being selected. As a result, the processing load of measuring the wireless-line qualities can be decreased.

As explained above, in the third embodiment, the weight-function verifying unit 39 of the handover control server 3a calculates the peripheral-cell selection parameter using the weight function calculated by the weight-function calculating unit 35 using the estimate wireless-line quality set in advance. When a calculated value of the peripheral-cell selection parameter is equal to or smaller than a predetermined peripheral-cell-selection threshold value, the cell having the calculated peripheral-cell selection parameter is excluded from the peripheral cells. Therefore, the number of cells of which wireless line is measured by the mobile device 1a can be decreased, and the processing load of the mobile device 1a for measuring the wireless-line qualities can be decreased. Further, the cells becoming the candidate of the handover can be limited.

When it is desired to suppress the handover to a specific cell by management policy of a mobile-network manager, the selection of a specific cell can be avoided, when the peripheral-cell-selection threshold value of the cell is set to a value more degraded than the actual estimate wireless-line quality (a value of a lower quality than the actual estimate wireless-line quality).

Fourth Embodiment.
Assume that in the radio communication system according to the first embodiment shown in Fig. 1, the mobile device 1 is performing communication by being positioned in the cell controlled by the base station 2-5, that is, in any one of the cells 11-5-1 to 11-5-6 of the cell configuration shown in Fig. 2. In this case, as explained in the first embodiment, the handover control server 3 notifies the cell list and the weight function information to the mobile device 1 as the information of the peripheral cells.

When the mobile device 1 is in any one of the cells 11-5-1 to 11-5-6, there is a case that the peripheral cells include the cells 11-1-1 to 1-1-6, 11-6-1 to 11-6-6, and the cells 11-7-1 to 11-7-4.

The base station 2-5 and the base station 2-1 are accommodated in the same edge router 4-2, and the base stations 2-6 and 2-7 are accommodated in the edge routers 4-3 and 4-1 different from the edge router in which the base station 2-5 is accommodated. The edge router 4-1 and 4-2 are accommodated in the router 5-1 and are connected to the IP network 8, and the edge router 4-3 is accommodated in the router 5-2, and is connected to the IP network 8.

The peripheral-cell selection-parameter calculating-and-comparing unit 15 and the peripheral-cell-selection determining unit 16 of the mobile device 1 measure the wireless-line qualities of the peripheral cells based on the cell list, obtain peripheral-cell selection parameters by calculating weight functions using the measured wireless-line qualities as an input, and determine the cell of the handover destination.

The peripheral cell 300 of the cell list includes the cells 11-6-1 to 11-6-6 and the cells 11-7-1 to 11-7-4 controlled by the base stations 2-6 and 2-7. When the peripheral-cell parameter of any one of the cellsll-6-1 to 11-6-6 and the cells 11-7-1 to 11-7-4 has a value of the best communication quality, any one of the cells 11-6-1 to 11-6-6 and the cells 11-7-1 to 11-7-4 is determined as a cell of the handover destination, and the handover process is performed. As a result, when the handover process is performed to any one of the cells 11-7-1 to 11-7-4 controlled by the base station 2-7, the routing of the core network 7 is changed from the edge router 4-2, the router 5-1, the IP network 8 to the edge router 4-1, the router 5-1, the IP network 8. When the handover process is performed to any one of the cells 11-6-1 to 11-6-6 controlled by the base station 2-6, the routing of the core network 7 is changed from the edge router 4-2, the router 5-1, the IP network 8 to the edge router 4-3, the router 5-2, the IP network 8.

In general, when the number of changed devices of routing in the core network 7 is large, the process delay within the core network 7 becomes large, and the wireless-line changeover quality at the time of handing over the mobile device 1 as the radio communication system is degraded.

Assume that there is a small difference between the measurement result of the wireless-line qualities of the cells 11-7-1 to 11-7-4 controlled by the base station 2-7 measured by the wireless-line-quality measuring unit 14 of the mobile device 1 and the wireless-line qualities of the cells 11-6-1 to 11-6-6 controlled by the base station 2-6, and that the measurement result of each of the cells 1-6-1 to 11-6-6 and 11-7-1 to 11-7-4 is sufficient as a communication quality. In this case, the peripheral-cell-selection determining unit 16 of the mobile device 1 determines the cell having the best value of the peripheral-cell selection parameter as a cell of the handover destination. That is, there is a risk of selecting the cells 11-6-1 to 11-6-6 controlled by the base station 2-6 having many changed devices of routing.

This problem can be solved by setting the routing information within the core network 7 accommodating the base station 2 having each cell connected to the weight function of each cell unit that the handover control server 3 notifies to the mobile device 1, as the function including the term having the changeover-necessary number of devices as an input. That is, the mobile device 1 determines a cell of the handover destination in the mode that the routing information of the core network 7 is reflected from the result obtained when the mobile device 1 calculates the weight function.

Specifically, at the time of calculating the weight function, the weight-function calculating unit 35 of the handover control server 3 generates the routing informing from the base-station identifier, the edge-router identifier, and the router identifier registered in the base station 100, the accommodation edge router 103, and the accommodation router 104 of the network configuration information (see Fig. 5) stored in the network-configuration memory unit 36. The weight-function calculating unit 35 calculates a weight function including the term having a changeover-necessary number of devices, by the routing of the edge router 4 and the router 5 accommodating the base station 2 controlling the cell 11 currently in communication, and the routing of the edge router 4 accommodating the base station 2 and the router 5 controlling the cell 11 becoming the peripheral cell. That is, the weight-function calculating unit 35 of the handover control server 3 calculates the weight function considering the routing.

The peripheral-cell selection-parameter calculating-and-comparing unit 15 of the mobile device 1 generates the routing informing from the base-station identifier, the edge-router identifier, and the router identifier registered in the base station 302, the accommodation edge router 304, and the accommodation router 305 of the cell list (see Fig. 7). The peripheral-cell selection-parameter calculating-and-comparing unit 15 calculates the changeover-necessary number of devices, by the routing of the edge router 4 accommodating the base station 2 and the router 5 controlling the cell 11 currently in communication, and the routing of the edge router 4 accommodating the base station 2 and the router 5 controlling the cell 11 becoming the peripheral cell. The peripheral-cell selection-parameter calculating-and-comparing unit 15 calculates the peripheral-cell selection parameter from the weight function including the term having the obtained number of devices as an input.

In a fourth embodiment of the present invention, the weight-function calculating unit 35 of the handover control server 3 extracts the information concerning the routing path of the base station 2, the edge router 4, and the router 5, from network configuration information stored in the network-configuration memory unit 36, and calculates the weight function including the term having the information concerning the extracted routing path as an input parameter. Therefore, at the time of determining a cell of the handover destination, a probability of selecting a cell in which the routing path is complex can be suppressed.

### Fifth Embodiment.

In the fourth embodiment, a weight function considering a routing is calculated, and the wireless-line change-over quality at the handover time of the mobile device 1 is improved by suppressing the processing delay due to a change of routing. In a fifth embodiment of the present invention, the wireless-line change-over quality at the handover time of the mobile device 1 is improved by including a condition different from the routing information into the term of the weight function.

As conditions to be included into the term of a weight function, there are communication quality information, movement record, a cell size (a cell radius, base-station maximum transmission power, etc), and a used resource. First, the inclusion of the communication line quality into the term of a weight function is explained.
In this example, three parameters of a peak bit rate, an average bit rate, and a minimum bit rate are used as the communication quality information held by a call in communication of the mobile device 1. In this case, the weight-function calculating unit 35 of the handover control server 3 includes the term having the three parameters of a peak bit rate, an average bit rate, and a minimum bit rate as an input, into the weight function.

The wireless-line-quality measuring unit 14 measures a peak bit rate, an average bit rate, and a minimum bit rate during the communication with the communication party, and notifies each bit rate measured to the handover control server 3.

The peripheral-cell selection-parameter calculating-and-comparing unit 15 of the handover control server 3 substitutes the peak bit rate, the average bit rate, and the minimum bit rate measured by the wireless-line-quality measuring unit 14, into the weight function, and calculates a peripheral-cell selection parameter.

The inclusion of the movement record into the term of a weight function is explained next. The weight-function calculating unit 35 of the handover control server 3 stores the movement record of the mobile device 1 in the cell unit, and calculates a weight function including the term using the stored movement record of the mobile device 1 as an input parameter.

The mobile device 1 stores a movement record moved by performing the handover process, in the cell unit. The peripheral-cell selection-parameter calculating-and-comparing unit 15 substitutes the stored movement record into the weight function, and calculates a peripheral-cell selection parameter.

The inclusion of the cell size into the term of a weight function is explained next. First, a cell radius and a base-station maximum transmission-power are included as a cell size into the cell configuration information stored into the cell-configuration memory unit 37. Specifically, a cell radius is registered related to the cell identifier registered in the reference cell 200 of the cell configuration information, and base-station maximum transmission-power is registered related to the base-station identifier registered in the base station 201 related to the cell identifier.

The weight-function calculating unit 35 of the handover control server 3 calculates a weight function including the term having the cell radius and the base-station maximum transmission-power as input parameters. On the other hand, the cell-list generating unit 34 generates a cell list including the information of the cell radius of the cell 11 selected as the peripheral cell and the base-station maximum transmission-power of the base station 2 controlling the selected cell 11 from the cell configuration information.

The peripheral-cell selection-parameter calculating-and-comparing unit 15 of the mobile device 1 obtains the cell radius of the peripheral cell and the base-station maximum transmission-power of the base station 2 controlling the peripheral cell from the cell list. The peripheral-cell selection-parameter calculating-and-comparing unit 15 substitutes the cell radius and the base-station maximum transmission-power obtained, into the weight function, and calculates the peripheral-cell selection parameter.

When the weight-function calculating unit 35 of the handover control server 3 calculates the weight function including the term combining the movement record and the cell size, the mobile device 1 moving at a fast speed can easily determine a cell having a large cell size as the cell of the handover destination.

The inclusion of the used resource into the term of a weight function is explained next. The weight-function calculating unit 35 of the handover control server 3 calculates a weight function including the term considering the used resource such as the wireless resource and the wired resource of the base station 2 controlling the peripheral cell, and the buffering source and the CPU using rate within the base station, from the used-resource information stored in the used-resource memory unit 38. Because the used resource is measured for each cell, the weight function can be calculated when the cell identifier registered in the peripheral cell 300 of the cell list is determined. Therefore, the term of the weight function concerning the used resource can have the cell identifier input as the input parameter, or a value calculated in advance can be a coefficient or an additional value.

The movement record and the used resource are parameters that change along lapse of time. Therefore, when a forgetting coefficient having a lapse time as a parameter is built into the mobile device 1 in advance, a momentary traffic variation or a momentary change of the moving speed can be absorbed.

As explained above, in the fifth embodiment, the weight-function calculating unit 35 of the handover control server 3 calculates the weight function including the term having the peak bit rate, the average bit rate, and the minimum bit rate as the communication quality information notified from the mobile device 1, as the input parameters. Therefore, the cell of the handover destination can be selected by considering the current communication quality.

Further, in the fifth embodiment, the weight-function calculating unit 35 of the handover control server 3 calculates the weight function including the term having the movement record of the cell in which the mobile device 1 moves, as the input parameter. Therefore, the cell of the handover destination can be selected by considering the moving speed of the mobile device 1.

Further, in the fifth embodiment, the weight-function calculating unit 35 of the handover control server 3 calculates the weight function including the term having at least one of the radius of the peripheral cell and the base-station maximum transmission-power of the base station 2 controlling the peripheral cell, as the input parameter. Therefore, a peripheral cell generating a handover involving communication quality degradation can be excluded from the cell of the handover destination.

Further, in the fifth embodiment, the weight-function calculating unit 35 of the handover control server 3 calculates the weight function including the term having either both or one of the used frequency and the wireless access system from the wireless access system including the used frequency included in the network configuration information, as input parameters. Therefore, the cell of the handover destination can be selected by considering the moving speed of the mobile device 1.

Further, in the fifth embodiment, the weight-function calculating unit 35 of the handover control server 3 calculates the weight function including the term calculated from the used resource measured by the base station 2. Therefore, the cell of the handover destination can be determined by considering the wireless resource and the wired resource, and the buffering source and the CPU using rate of the base station 2.

### INDUSTRIAL APPLICABILITY

As explained above, the radio communication system according to the present invention is useful for the radio communication system in which the used wireless resource changes according to the wireless line quality, and is particularly suitable for the radio communication system that performs handover according to a measured level of the wireless-line quality.

## Claims

1. A radio communication system including a plurality of base stations that makes a connection to a mobile device via a wireless line by controlling at least one cell, a plurality of edge routers that accommodates at least one of the base stations, and a plurality of routers that accommodates at least one of the edge routers and makes a connection to a handover control server and a second network via a first network, wherein
the base station includes a used-resource measuring unit that measures a used resource for each cell controlled by the base station, and notifies a measured used resource to the handover control server,
the handover control server includes
a network-configuration memory unit that stores therein network configuration information concerning a wireless access system including a used frequency of the base station, cell information controlled by the base station, an edge router accommodating the base station, and a router accommodating the edge router, in association with the base stations,
a cell-configuration memory unit that stores therein cell configuration information concerning cell configurations controlled by the base stations,
a used-resource memory unit that stores therein used-resource information including the used resource notified from the base station associated with the base station,
a weight-function calculating unit that calculates a weight function of each peripheral cell of a cell to which the mobile device is currently connected, based on a wireless-access capacity notified from the mobile device, network configuration information stored in the network-configuration memory unit, cell configuration information stored in the cell-configuration memory unit, and used-resource information stored in the used-resource memory unit, and notifies weight-function information that is a set of a calculated weight function and the weight-function identifier for identifying the,weight function to the mobile device, and
a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, and notifies a generated cell list to the mobile device, and
the mobile device includes
a peripheral-cell-list memory unit that stores therein a cell list notified from the handover control server,
a weight-function memory unit that stores therein weight-function information notified from the handover control server,
a wireless-line-quality measuring unit that measures wireless-line qualities of peripheral cells registered in the cell list stored in the peripheral-cell-list memory unit and the cell currently connected,
a peripheral-cell selection-parameter calculating-and-comparing unit that calculates a peripheral-cell selection parameter of each cell, by inputting a predetermined parameter to a weight function within the weight function information, based on a wireless-line quality measured by the wireless-line-quality measuring unit, a cell list stored in the peripheral-cell-list memory unit, weight function information stored in the weight-function memory unit, and a wireless-access capacity of the mobile device, and selects candidate cells of a handover destination, based on a calculated peripheral-cell selection parameter, and
a peripheral-cell-selection determining unit that determines as a cell of the handover destination a cell having a peripheral-cell parameter of the best communication quality, from among cells having peripheral-cell selection parameters of a better communication quality than that of the cell currently connected, from the candidate cells of the handover destination selected by the peripheral-cell selection-parameter calculating-and-comparing unit.

2. The radio communication system according to claim 1, wherein the handover control server further includes a weight-function verifying unit that calculates a peripheral-cell selection parameter using a weight function calculated by the weight-function calculating unit using an estimate wireless-line quality set in advance, and determines to exclude a cell having the calculated selection parameter from the peripheral cells, when a calculated value of the peripheral-cell selection parameter is equal to or smaller than a predetermined peripheral-cell-selection threshold value.

3. A radio communication system including a plurality of base stations that makes a connection to a mobile device via a wireless line by controlling at least one cell, a plurality of edge routers that accommodates at least one of the base stations, and a plurality of routers that accommodates at least one of the edge routers and connected to a handover control server and a second network via a first network, wherein
the base station includes a used-resource measuring unit that measures a used resource for each cell controlled by the base station, and notifies a measured used resource to the handover control server,
the handover control server includes
a network-configuration memory unit that stores therein network configuration information concerning a wireless access system of the base station, cell information controlled by the base station, an edge router accommodating the base station, and a router accommodating the edge router, by associating with the information to the base stations,
a cell-configuration memory unit that stores therein cell configuration information concerning cell configurations controlled by the base stations,
a used-resource memory unit that stores therein used-resource information including the used resource notified from the base station associated with the base station,
a weight-function calculating unit that calculates a weight function of each peripheral cell of a cell to which the mobile device is currently connected, based on a wireless-access capacity notified from the mobile device, network configuration information stored in the network-configuration memory unit, cell configuration information stored in the cell-configuration memory unit, and used-resource information stored in the used-resource memory unit, and stores therein weight-function information that is a set of a calculated weight function and the weight-function identifier for identifying the weight function,
a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, and notifies at least information concerning peripheral cells within the cell list and a base station controlling the peripheral cell, to the mobile device as a cell list, and
a weight-function verifying unit that calculates a peripheral-cell selection parameter of each cell by inputting a predetermined parameter to a weight function within the weight-function information, based on the wireless-line quality information and the wireless access capacity notified from the mobile device, the weight-function information stored in the weight-function calculating unit, and the cell list generated by the cell-list generating unit, selects cells becoming candidates of a handover destination based on a calculated peripheral-cell selection parameter, determines as a cell of a handover destination a cell having a peripheral-cell selection parameter of a better communication quality than that of the cell to which the mobile device is connected, and the peripheral-cell selection parameter of the best communication quality, and notifies a handover-destination cell notification including the determined cell to the mobile device, and
the mobile device includes
a peripheral-cell-list memory unit that stores therein a cell list notified from the handover control server, and
a wireless-line-quality measuring unit that measures wireless-line qualities of wireless lines connected to each peripheral cell registered in the cell list stored in the peripheral-cell-list memory unit and the cell currently connected, and notifies a measured result to the handover control server, and
the mobile device performs a handover process from the handover control server to the cell included in the handover destination cell.

4. The radio communication system according to claim 3, wherein the weight-function verifying unit calculates a peripheral-cell selection parameter using a weight function calculated by the weight-function calculating unit using an estimate wireless-line quality set in advance, and determines to exclude a cell having the calculated selection parameter from the peripheral cells, when a calculated value of the peripheral-cell selection parameter is equal to or smaller than a predetermined peripheral-cell-selection threshold value.

5. The radio communication system according to claim 1, wherein the weight-function calculating unit extracts information concerning a routing path of the base station, the edge router, and the router, from the network configuration information stored in the network-configuration memory unit, and calculates a weight function including a term having the extracted information concerning a routing path as an input parameter.

6. The radio communication system according to claim 1, wherein
the wireless-line-quality measuring unit of the mobile device measures communication quality information during communication with the other communication party, and notifies measured information to the handover control server, and
the weight-function calculating unit of the handover control server calculates a weight function including a term using the communication quality information notified from the mobile device as an input parameter.

7. The radio communication system according to claim 6, wherein the communication quality information includes a peak bit rate, an average bit rate, and a minimum bit rate.

8. The radio communication system according to claim 1, wherein the weight-function calculating unit stores therein a movement record of a cells to which the mobile device moves, and calculates a weight function including a term having the stored movement record as an input parameter.

9. The radio communication system according to claim 1, wherein
information concerning a cell size of each cell is registered into the cell configuration information stored in the cell-configuration memory unit, and
the weight-function calculating unit calculates a weight function including a term having a cell size registered in the cell configuration information as an input parameter.

10. The radio communication system according to claim 9, wherein the cell size is base-station maximum transmission-power of both or one of a radius of a cell and a base station that controls the cell.

11. The radio communication system according to claim 1, wherein the weight-function calculating unit obtains a wireless-access system including a used frequency of the network configuration information stored in the network-configuration memory unit, and calculates a weight function including a term having either both or one of the obtained used frequency and the wireless access system as an input parameter.

12. The radio communication system according to claim 1, wherein the weight-function calculating unit obtains a used resource of used-resource information stored in the used-resource memory unit, and calculates a weight function including a term calculated from the obtained used resource.

13. A radio communication system including a plurality of base stations including a base station having a server function, which makes a connection to a mobile device via a wireless line by controlling at least one cell and having a handover-control server function, a plurality of edge routers that accommodates at least one of the base stations, and a plurality of routers that accommodates at least one of the edge routers and connected to a network, wherein
the base station includes a used-resource measuring unit that measures a used resource for each cell controlled by the base station, and notifies a measured used resource to the base station having a server function,
the base station having a server function includes
a used-resource measuring unit that measures a used resource for each cell controlled by the base station,
a network-configuration memory unit that stores therein network configuration information concerning a wireless access system including used frequencies of the base stations associated with the base stations, cell information controlled by the base stations, edge routers accommodating the base stations, and routers accommodating the edge router,
a cell-configuration memory unit that stores therein cell configuration information concerning cell configurations controlled by the base stations,
a used-resource memory unit that stores therein used-resource information including the used resource notified from the base station different from the base station, and the used resource measured by the used-resource measuring unit of the base station, associated with the base station,
a weight-function calculating unit that calculates a weight function of each peripheral cell of a cell to which the mobile device is currently connected, based on a wireless-access capacity notified from the mobile device, network configuration information stored in the network-configuration memory unit, cell configuration information stored in the cell-configuration memory unit, and used-resource information stored in the used-resource memory unit, and notifies weight-function information that is a set of a calculated weight function and the weight-function identifier for identifying the weight function to the mobile device, and
a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, and notifies the generated cell list to the mobile device, and
the mobile device includes
a peripheral-cell-list memory unit that stores therein a cell list notified from the base station having a server function,
a weight-function memory unit that stores therein weight-function information notified from the base station having a server function,
a wireless-line-quality measuring unit that measures wireless-line qualities of peripheral cells registered in the cell list stored in the peripheral-cell-list memory unit and the cell currently connected,
a peripheral-cell selection-parameter calculating-and-comparing unit that calculates a peripheral-cell selection parameter of each cell, by inputting a predetermined parameter to a weight function within the weight function information, based on a wireless-line quality measured by the wireless-line-quality measuring unit, a cell list stored in the peripheral-cell-list memory unit, weight function information stored in the weight-function memory unit, and a wireless-access capacity of the mobile device, and selects candidate cells of a handover destination, based on a calculated peripheral-cell selection parameter, and
a peripheral-cell-selection determining unit that determines as a cell of the handover destination a cell having a peripheral-cell parameter of the best communication quality, from among cells having peripheral-cell selection parameters of a better communication quality than that of the cell currently connected, from the candidate cells of the handover destination selected by the peripheral-cell selection-parameter calculating-and-comparing unit.

14. A radio communication system including a plurality of base stations including a base station having a server function, which makes a connection to a mobile device via a wireless line by controlling at least one cell and having a handover-control server function, a plurality of edge routers that accommodates at least one of the base stations, and a plurality of routers that accommodates at least one of the edge routers and connected to a network, wherein
the base station includes a used-resource measuring unit that measures a used resource for each cell controlled by the base station, and notifies a measured used resource to the base station having a server function,
the base station having a server function includes
a used-resource measuring unit that measures a used resource for each cell controlled by the base station,
a network-configuration memory unit that stores therein network configuration information concerning a wireless access system including used frequencies of the base stations associated with the base stations, cell information controlled by the base stations, edge routers accommodating the base stations, and routers accommodating the edge router,
a cell-configuration memory unit that stores therein cell configuration information concerning cell configurations controlled by the base stations,
a used-resource memory unit that stores therein used-resource information including the used resource notified from the base station different from the base station, and the used resource measured by the used-resource measuring unit of the base station, associated with the base station,
a weight-function calculating unit that calculates a weight function of each peripheral cell of a cell to which the mobile device is currently connected, based on a wireless-access capacity notified from the mobile device, network configuration information stored in the network-configuration memory unit, cell configuration information stored in the cell-configuration memory unit, and used-resource information stored in the used-resource memory unit, and stores therein weight-function information that is a set of a calculated weight function and the weight-function identifier for identifying the weight function,
a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, based on the weight function information generated by the weight-function calculating unit, the network configuration information stored in the network-configuration memory unit, and the cell configuration information stored in the cell-configuration memory unit, and notifies at least the peripheral cells within the generated cell list and the information concerning the base stations controlling the peripheral cells, as the cell list to the mobile device, and
a weight-function verifying unit that calculates a peripheral-cell selection parameter of each cell by inputting a predetermined parameter to a weight function within the weight-function information, based on the wireless-line quality information and the wireless access capacity notified from the mobile device, the weight-function information stored in the weight-function calculating unit, and the cell list generated by the cell-list generating unit, selects cells becoming candidates of a handover destination based on a calculated peripheral-cell selection parameter, determines as a cell of a handover destination a cell having a peripheral-cell selection parameter of a better communication quality than that of the cell to which the mobile device is connected, and the peripheral-cell selection parameter of the best communication quality, and performs a handover process to the determined cell,
the mobile device includes
a peripheral-cell-list memory unit that stores therein a cell list notified from the base station having a server function, and
a wireless-line-quality measuring unit that measures wireless-line qualities of peripheral cells registered in the cell list stored in the peripheral-cell-list memory unit and the cell currently connected, and
the mobile device performs a handover process to the cell included in the handover destination cell from the base station having a server function.

15. A base station applied to a radio communication system including a core network having a plurality of edge routers, and a plurality of routers connected to a handover control server and a second network via a first network accommodating at least one of the edge routers, in which the handover control server calculates a weight function of each peripheral cell of a cell currently connected with the mobile device, based on wireless access capacity notified from the mobile device and network configuration information, cell configuration information, and used-resource information stored by the mobile device, generates a cell list based on weight-function information including a calculated weight function, the network configuration information, and the cell configuration information, and notifies the generated cell list and the weight-function information to the mobile device, and the mobile device determines a cell of the handover destination based on the weight-function information and the cell list notified from the handover control server, and a measured wireless-line quality, the base station accommodated in the edge router, and connected to the mobile device via a wireless line by controlling at least one cell, the base station comprising:
a used-resource measuring unit that measures a used resource for each cell controlled by the base station, and notifies the measured used resource to the handover control server.

16. A base station applied to a radio communication system including a core network having a plurality of edge routers, and a plurality of routers connected to a network accommodating at least one of the edge routers, accommodated in the edge router and connected to a mobile device via a wireless line by controlling at least one cell, the base station comprising:
a used-resource measuring unit that measures a used resource for each cell controlled by the base station;
a network-configuration memory unit that stores therein network configuration information concerning a wireless access system including a used frequency of the base station, cell information controlled by the base station, an edge router accommodating the base station, and a router accommodating the edge router, by associating with the information to the base stations;
a cell-configuration memory unit that stores therein cell configuration information concerning cell configurations controlled by the base stations;
a used-resource memory unit that stores therein used-resource information including the used resource notified from the base station different from the base station, and used-resource measured by the used-resource measuring unit of the base station, associated with the base station;
a weight-function calculating unit that calculates a weight function of each peripheral cell of a cell to which the mobile device is currently connected, based on a wireless-access capacity notified from the mobile device, network configuration information stored in the network-configuration memory unit, cell configuration information stored in the cell-configuration memory unit, and used-resource information stored in the used-resource memory unit, and stores therein weight-function information that is a set of a calculated weight function and the weight-function identifier for identifying the weight function; and
a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, based on the weight function information generated by the weight-function calculating unit, based on weight-function information generated by the weight-function calculating unit, network configuration information stored in the network-configuration memory unit, and cell configuration information stored in the cell-configuration memory unit, and notifies the generated cell list to the mobile device.

17. A base station applied to a radio communication system including a core network having a plurality of edge routers, and a plurality of routers connected to a network accommodating at least one of the edge routers, accommodated in the edge router and connected to a mobile device via a wireless line by controlling at least one cell, the base station comprising:
a used-resource measuring unit that measures a used resource for each cell controlled by the base station;
a network-configuration memory unit that stores therein network configuration information concerning a wireless access system including a used frequency of the base station, cell information controlled by the base station, an edge router accommodating the base station, and a router accommodating the edge router, by associating with the information to the base stations;
a cell-configuration memory unit that stores therein cell configuration information concerning cell configurations controlled by the base stations;
a used-resource memory unit that stores therein used-resource information including the used resource notified from the base station different from the base station, and used-resource measured by the used-resource measuring unit of the base station, associated with the base station;
a weight-function calculating unit that calculates a weight function of each peripheral cell of a cell to which the mobile device is currently connected, based on a wireless-access capacity notified from the mobile device, network configuration information stored in the network-configuration memory unit, cell configuration information stored in the cell-configuration memory unit, and used-resource information stored in the used-resource memory unit, and stores therein weight-function information that is a set of a calculated weight function and the weight-function identifier for identifying the weight function;
a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, based on the weight function information generated by the weight-function calculating unit, based on weight-function information generated by the weight-function calculating unit, network configuration information stored in the network-configuration memory unit, and cell configuration information stored in the cell-configuration memory unit, and notifies at least the peripheral cells within the generated cell list and the information concerning the base stations controlling the peripheral cells, as the cell list to the mobile device; and
a weight-function verifying unit that calculates a peripheral-cell selection parameter of each cell by inputting a predetermined parameter to a weight function within the weight-function information, based on the wireless-line quality information and the wireless access capacity notified from the mobile device, the weight-function information stored in the weight-function calculating unit, and the cell list generated by the cell-list generating unit, selects cells becoming candidates of a handover destination based on a calculated peripheral-cell selection parameter, determines as a cell of a handover destination a cell having a peripheral-cell selection parameter of a better communication quality than that of the cell to which the mobile device is connected, and the peripheral-cell selection parameter of the best communication quality, and performs a handover process to the determined cell.

18. A mobile device applied to a radio communication system including a plurality of base stations controlling at least one cell, a plurality of edge routers accommodating at least one of the base stations, and a plurality of routers accommodating at least one of the edge routers and connected to a handover control server and a second network via a first network, in which the handover control server calculates a weight function of each peripheral cell based on a wireless access capacity, and network configuration information, cell configuration information, and used-resource information stored by the mobile device, generates a cell list based on the weight function information including a calculated weight function, the network configuration information, and the cell configuration information, and notifies the generated cell list and the calculated weight function, the mobile device connected to the base station via a wireless line, and comprising:
a peripheral-cell-list memory unit that stores therein a cell list notified from the handover control server;
a weight-function memory unit that stores therein weight-function information notified from the handover control server;
a wireless-line-quality measuring unit that measures wireless-line qualities of peripheral cells registered in the cell list stored in the peripheral-cell-list memory unit and the cell currently connected;
a peripheral-cell selection-parameter calculating-and-comparing unit that calculates a peripheral-cell selection parameter of each cell, by inputting a predetermined parameter to a weight function within the weight function information, based on a wireless-line quality measured by the wireless-line-quality measuring unit, a cell list stored in the peripheral-cell-list memory unit, weight function information stored in the weight-function memory unit, and a wireless-access capacity of the mobile device, and selects candidate cells of a handover destination, based on a calculated peripheral-cell selection parameter; and
a peripheral-cell-selection determining unit that determines as a cell of the handover destination a cell having a peripheral-cell parameter of the best communication quality, from among cells having peripheral-cell selection parameters of a better communication quality than that of the cell currently connected, from the candidate cells of the handover destination selected by the peripheral-cell selection-parameter calculating-and-comparing unit.

19. A mobile device applied to a radio communication system including a plurality of base stations controlling at least one cell, a plurality of edge routers accommodating at least one of the base stations, and a plurality of routers accommodating at least one of the edge routers and connected to a handover control server and a second network via a first network, and connected to the base stations via a wireless line, in which the handover control server calculates a weight function of each peripheral cell based on a wireless access capacity, and network configuration information, cell configuration information, and used-resource information stored by the mobile device, generates and notifies a cell list based on the weight function information including a calculated weight function, the network configuration information, and the cell configuration information, and performs a handover control using the cell list and weight function information, the mobile device comprising:
a peripheral-cell-list memory unit that stores therein a cell list notified from the handover control server; and
a wireless-line-quality measuring unit that measures wireless-line qualities of peripheral cells registered in the cell list stored in the peripheral-cell-list memory unit and the cell currently connected, and notifies a measured result to the handover control server, wherein
upon receiving a handover-destination cell notification for notifying a cell of the handover destination determined using a notified wireless-line quality from the handover control server, the mobile device performs a handover process to a notified cell.

20. A mobile device applied to a radio communication system including a plurality of base stations controlling at least one cell and including a base station having a server function having a function of a handover control server, a plurality of edge routers accommodating at least one of the base stations, and a plurality of routers accommodating at least one of the edge routers and connected to a network, in which the base station having a server function calculates a weight function of each peripheral cell based on a wireless access capacity, and network configuration information, cell configuration information, and used-resource information stored by the mobile device, generates a cell list based on the weight function information including a calculated weight function, the network configuration information, and the cell configuration information, and notifies the generated cell list and the calculated weight function, the mobile device connected to the base station via a wireless line, and comprising:
a peripheral-cell-list memory unit that stores therein a cell list notified from the base station having a server function;
a weight-function memory unit that stores therein weight-function information notified from the base station having a server function;
a wireless-line-quality measuring unit that measures wireless-line qualities of peripheral cells registered in the cell list stored in the peripheral-cell-list memory unit and the cell currently connected;
a peripheral-cell selection-parameter calculating-and-comparing unit that calculates a peripheral-cell selection parameter of each cell, by inputting a predetermined parameter to a weight function within the weight function information, based on a wireless-line quality measured by the wireless-line-quality measuring unit, a cell list stored in the peripheral-cell-list memory unit, weight function information stored in the weight-function memory unit, and a wireless-access capacity of the mobile device, and selects candidate cells of a handover destination, based on a calculated peripheral-cell selection parameter; and
a peripheral-cell-selection determining unit that determines as a cell of the handover destination a cell having a peripheral-cell parameter of the best communication quality, from among cells having peripheral-cell selection parameters of a better communication quality than that of the cell currently connected, from the candidate cells of the handover destination selected by the peripheral-cell selection-parameter calculating-and-comparing unit.

21. A mobile device applied to a radio communication system including a plurality of base stations controlling at least one cell and including a base station having a server function having a function of a handover control server, a plurality of edge routers accommodating at least one of the base stations, and a plurality of routers accommodating at least one of the edge routers and connected to a network, and connected to the base station via a wireless line, in which the base station having a server function calculates a weight function of each peripheral cell based on a wireless access capacity, and network configuration information, cell configuration information, and used-resource information stored by the mobile device, generates and notifies a cell list based on the weight function information including a calculated weight function, the network configuration information, and the cell configuration information, and performs a control of a handover using the cell list and the weight function information, the mobile device comprising:
a peripheral-cell-list memory unit that stores therein a cell list notified from the base station having a server function; and
a wireless-line-quality measuring unit that measures wireless-line qualities of peripheral cells registered in the cell list stored in the peripheral-cell-list memory unit and the cell currently connected, and notifies a measured result to the base station having a server function, wherein
upon receiving a handover-destination cell notification for notifying a cell of the handover destination determined using a notified wireless-line quality from the base station having a server function, the mobile device performs a handover process to a notified cell.

22. A handover control server applied to a radio communication system including a plurality of base stations connected to a mobile device via a wireless line by controlling at least one cell, a plurality of edge routers accommodating at least one of the base stations, and a plurality of routers accommodating at least one of the edge routers and connected to a second network via a first network, the handover control server connected to the router via the first network, and comprising:
a network-configuration memory unit that stores therein network configuration information concerning a wireless access system including a used frequency of the base station, cell information controlled by the base station, an edge router accommodating the base station, and a router accommodating the edge router, by associating with the information to the base stations;
a cell-configuration memory unit that stores therein cell configuration information concerning cell configurations controlled by the base stations;
a used-resource memory unit that stores therein used-resource information including the used resource notified from the base station associated with the base station;
a weight-function calculating unit that calculates a weight function of each peripheral cell of a cell to which the mobile device is currently connected, based on a wireless-access capacity notified from the mobile device, network configuration information stored in the network-configuration memory unit, cell configuration information stored in the cell-configuration memory unit, and used-resource information stored in the used-resource memory unit, and stores therein weight-function information that is a set of a calculated weight function and the weight-function identifier for identifying the weight function; and
a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, based on the weight function information generated by the weight-function calculating unit, based on weight-function information generated by the weight-function calculating unit, network configuration information stored in the network-configuration memory unit, and cell configuration information stored in the cell-configuration memory unit, and notifies the generated cell list to the mobile device.

23. A handover control server applied to a radio communication system including a plurality of base stations connected to a mobile device via a wireless line by controlling at least one cell, a plurality of edge routers accommodating at least one of the base stations, and a plurality of routers accommodating at least one of the edge routers and connected to a second network via a first network, the handover control server connected to the router via the first network, and comprising:
a network-configuration memory unit that stores therein network configuration information concerning a wireless access system of the base station, cell information controlled by the base station, an edge router accommodating the base station, and a router accommodating the edge router, by associating with the information to the base stations;
a cell-configuration memory unit that stores therein cell configuration information concerning cell configurations controlled by the base stations;
a used-resource memory unit that stores therein used-resource information including the used resource notified from the base station associated with the base station;
a weight-function calculating unit that calculates a weight function of each peripheral cell of a cell to which the mobile device is currently connected, based on a wireless-access capacity notified from the mobile device, network configuration information stored in the network-configuration memory unit, and cell configuration information stored in the cell-configuration memory unit, and stores therein weight-function information that is a set of a calculated weight function and the weight-function identifier for identifying the weight function;
a cell-list generating unit that generates a cell list in which there is registered information concerning a weight-function identifier of the peripheral cell associated with the peripheral cell, a base station controlling the peripheral cell, a wireless access system of the base station, an edge router accommodating the base station, and a router identifying the edge router, based on the weight function information generated by the weight-function calculating unit, based on weight-function information generated by the weight-function calculating unit, network configuration information stored in the network-configuration memory unit, and cell configuration information stored in the cell-configuration memory unit, and notifies information concerning at least peripheral cells and the base station controlling the peripheral cells within the generated cell list as the cell list to the mobile device; and
a weight-function verifying unit that calculates a peripheral-cell selection parameter of each cell by inputting a predetermined parameter to a weight function within the weight-function information, based on the wireless-line quality information and the wireless access capacity notified from the mobile device, the weight-function information stored in the weight-function calculating unit, and the cell list generated by the cell-list generating unit, selects cells becoming candidates of a handover destination based on a calculated peripheral-cell selection parameter, and determines as a cell of a handover destination a cell having a peripheral-cell selection parameter of a better communication quality than that of the cell to which the mobile device is connected, and the peripheral-cell selection parameter of the best communication quality.
